# EUROPEAN PATENT APPLICATION

(11) **EP 4 535 196 A1**
(43) Date of publication of application: **09.04.2025**
(21) Application number: 24203701.8
(22) Date of filing: 30.09.2024
(51) Int. Cl.: G06F 16/906

(54) **IDENTIFICATION AND ALERT GENERATION FOR MISCATEGORIZATIONS IN CATEGORIZATION PROBLEMS**

(30) Priority: 02.10.2023 US 202318375775
(71) Applicant: Intuit Inc., Mountain View, CA 94043 (US)
(72) Inventor: BAR ELIYAHU, Natalie, Mountain View, 94043 (US); WOSNER, Omer, Mountain View, 94043 (US)
(74) Representative: D Young & Co LLP

(57) **Abstract**

Systems and methods are disclosed for managing categorization problem solutions and identifying miscategorizations. The identification of a miscategorization of an object is based on the object's first embedding being different than the first embeddings of other objects in a cluster. The objects in the cluster are clustered together based on second embeddings of the objects, with the first embedding generated based on a first description associated with an object and the second embedding generated based on a second description associated with the object. As such, while the clustering of second embeddings may initially indicate that the objects in the cluster are similar, the comparison between first embeddings of the objects in the cluster (such as calculating a distance between a first embedding and a center of the cluster based on the first embeddings) can confirm whether an object in the cluster is different and thus is potentially miscategorized.

## Description

### CROSS-REFERENCE TO RELATED APPLICATIONS

This Patent Application claims priority to U.S. Patent Application No. 18/375,775 entitled "IDENTIFICATION AND ALERT GENERATION FOR MISCATEGORIZATIONS IN CATEGORIZATION PROBLEMS" and filed on October 02, 2023, which is assigned to the assignee hereof. The disclosures of all prior Applications are considered part of and are incorporated by reference in this Patent Application.

### TECHNICAL FIELD

This disclosure relates generally to the management of categorization problem solving, including the identification of miscategorizations and the generation of alerts for such miscategorizations.

### DESCRIPTION OF RELATED ART

A categorization problem includes the problem of correctly categorizing various objects into various categories. For example, a personal activity tracker (such as from FitBit^{®} or Garmin^{®}) may track and indicate heart rate, steps taken, pulse oximetry, and other data for different times of the day. A user (or the service itself) may then categorize the activity performed by the user for those different times of the day (such as sleeping, walking, running, biking, swimming, or resting). In another example, website articles are to be organized on the website based on the content of each article, and each article may thus be categorized based on its content. As such, a user (such as the author or an editor) or machine learning (ML) model may categorize each article based on the text included in each article. In yet another example, products sold by an online retailer may be categorized based on the item description of each item. As such, a user (such as a website developer or retail employee) or an ML model may categorize each product based on the product description written for each product.

When solving categorization problems, miscategorization of objects to be categorized may occur. For example, if predefined categories are to be used for the categorization problem, a user that manually categorizes objects may select an incorrect predefined category for one or more objects. In another example, if a user is to provide free-form text to categorize objects, the user may input a text that does not properly categorize an object.

### SUMMARY

Systems and methods are disclosed for identifying the miscategorization of objects for various categorization problems. In particular, a miscategorized object that is categorized based on a one description may be identified as miscategorized based on a different description, with the descriptions being text from or about the object. For example, if a user categorizes an article based on a title of the article, the article may be misleading or incomplete and cause the user to miscategorize the article. As such, a system may identify whether the article is miscategorized based on an executive summary of the article. To identify a miscategorized object, clustered objects with a similar description as the miscategorized object may have their other descriptions compared to the miscategorized object's other description by the system to identify whether the miscategorized object's second description is similar to the other objects' second descriptions. For the system to compare the descriptions, the system includes a natural language processing (NLP) model to convert a description into an embedding, which may be a vector of tokens. In this manner, the system may determine the similarity between descriptions as the distance between the associated embeddings generated by the NLP model. In addition to identifying a miscategorization, the system is configured to generate an alert to indicate the identified miscategorization.

One innovative aspect of the subject matter described in this disclosure can be implemented as a computer-implemented method for identifying miscategorizations of objects. The method includes generating, by a natural language processing (NLP) model, a first embedding of a first categorized object included in a first cluster of categorized objects based on a first description associated with the first categorized object. Each of the categorized objects in the first cluster is associated with a first embedding. The method also includes calculating a distance between the first embedding of the first categorized object and a first center of the first cluster. The first center is calculated from the first embeddings associated with the categorized objects in the first cluster. The method further includes comparing the distance to a threshold and identifying a miscategorization of the first categorized object based on the comparison.

Another innovative aspect of the subject matter described in this disclosure can be implemented in a system for identifying miscategorizations of objects. An example system includes one or more processors and a memory storing instructions that, when executed by the one or more processors, cause the system to perform operations. The operations include generating, by an NLP model, a first embedding of a first categorized object included in a first cluster of categorized objects based on a first description associated with the first categorized object. Each of the categorized objects in the first cluster is associated with a first embedding. The operations also include calculating a distance between the first embedding of the first categorized object and a first center of the first cluster. The first center is calculated from the first embeddings associated with the categorized objects in the first cluster. The operations further include comparing the distance to a threshold and identifying a miscategorization of the first categorized object based on the comparison.

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example system for identifying miscategorizations, according to some implementations.
Figure 2 shows an example network environment for communicating between a miscategorization identification system and other computing devices, according to some implementations.
Figure 3 shows an example block diagram for identifying object miscategorizations, according to some implementations.
Figure 4 shows an illustrative flow chart of an example operation of identifying object miscategorizations, according to some implementations.
Figure 5 shows an illustrative flow chart of an example operation of identifying vendor miscategorizations, according to some implementations.
Figure 6 shows an example block diagram for identifying object miscategorizations based on crowd clusters and user-specific clusters, according to some implementations.
Figure 7 shows an illustrative flow chart of an example operation of identifying object miscategorizations based on crowd clusters and user-specific clusters, according to some implementations.
Figure 8 shows an illustrative flow chart of an example operation of identifying vendor miscategorizations based on crowd clusters and user-specific clusters, according to some implementations.

Like numbers reference like elements throughout the drawings and specification.

### DETAILED DESCRIPTION

Implementations of the subject matter described in this disclosure may be used for the management of categorization problem solutions, including the identification of miscategorizations. A categorization problem is a problem to be solved regarding the categorization or classification of one or more objects. Humans have been manually solving categorization problems throughout existence, and more recently, machine learning (ML) models have been trained to solve categorization problems.

Objects and categories to categorize such objects may take any number of forms as desired for a categorization problem. In some types of categorization problems, an object is categorized based on a description of the object (such as text associated with the object). In an example, a news aggregation website (or other types of websites) aggregates articles from various sources. A categorization problem may include the objects to be categorized as the articles, with the categorization problem including categorizing the different articles to a specific category of interest (such as sports, local news, celebrity news, etc.) based on the content of the article. In such an example, categorization of an article may be based on the title of the article. In a further example, an online retailer may promote or sell a variety of products over a variety of categories (such as home, lawn and garden, electronics, appliances, toys, etc.). A categorization problem may include the objects to be categorized as the products, with categorization of a product to a specific category being based on a text describing the product (such as a title or blurb for the object). In another example, book transactions of a ledger may be categorized to different vendors or to different spending and income categories to organize the ledger. A categorization problem may include the objects to be categorized as the book transactions, with categorization of a book transaction being based on a text from an associated financial transaction (such as from a bank transaction in a bank statement).

In using text to categorize an object, miscategorizations of the object may occur. For example, in categorizing articles or products based on a title of the article or the product, a title may be incomplete or misleading, causing a user to accidentally select an incorrect category or type in free-form text a category that is erroneous for an article or product associated with the title. In another example, in categorizing a book transaction based on text from a financial transaction, the text may be incomplete or difficult to decipher, causing a user to accidentally select an incorrect category or type in free-form text a category that is erroneous for the book transaction. While an ML model (or other automated models) may assist in accuracy to reduce manual errors, an ML model may still select or insert an undesired category for an object based on the same text. If there exist thousands or even millions of categorizations, a manual review of such categorizations may be impossible. In addition, manual review relies on the expertise and subjectiveness of the reviewer.

As such, it may be appropriate to provide a specific computing system that is configured to automatically identify the potential miscategorization of an object using an objective metric that can be calculated efficiently for a large pool of objects.

Various implementations of the subject matter disclosed herein provide one or more technical solutions to objectively identifying miscategorizations of obj ects. To identify a miscategorization of an object that was categorized based on a description of the object, a different description of the object is used to verify the categorization. For example, if articles are categorized based on the titles of the articles, a summary of an article may be used by a system to identify whether the article is miscategorized based on the title. To identify a miscategorization of an object, the object is clustered with other objects having similar descriptions as the object, with those descriptions previously used to categorized the other objects. For example, each object's description that was used to categorize the object is used to generate an embedding (such as converting the text description into a vector of tokens) by a natural language processing (NLP) model, and a plurality of objects are clustered into a plurality of clusters by a clustering engine based on distances between the embeddings of the objects. The object that is to be identified as miscategorized is included in the cluster with the embeddings closest to the embedding associated with the object. For the cluster including the object and for each object in the cluster, a different description of the object is used to generate another embedding by an NLP model. The other embedding associated with the object is compared to the other embeddings of the other clustered objects to identify whether that other embedding is similar to the other embeddings of the other clustered objects. For example, a distance between the other embedding and a center of the other embeddings of the cluster may be calculated and compared to a threshold. If the distance is greater than the threshold, the system may identify the object as being miscategorized. In this manner, the system is able to identify an object as being miscategorized based on a first description of the object, with the object being originally categorized based on a second description of the object. The system may also generate an indication of miscategorization of an object in response to identifying the miscategorization and transmit the indication over a communications network to a computing device to indicate the miscategorization to a user.

Various aspects of the present disclosure provide a unique computing solution to a unique computing problem that did not exist prior to large electronic datasets and the processing of such in an efficient manner. The implementation and use of specific machine learning technology (including natural language processors) as described herein cannot be performed in the human mind, much less practically in the human mind, including the use of pen and paper. In addition, the processing of hundreds of thousands or even millions of categorizations efficiently and objectively cannot be performed practically in the human mind, including the use of pen and paper. Further, indications of miscategorizations are transmitted over a communications network to a user's computing device cannot be performed in the human mind, including the use of pen and paper. As such, implementations of the subject matter disclosed herein are not an abstract idea such as organizing human activity or a mental process that can be performed in the human mind. Further, while examples are described herein with reference to book transactions of a ledger and financial transactions for clarity in explaining aspects of the present disclosure, the present disclosure applies to various other categorization problems. As such, implementations of the subject matter disclosed herein are not considered fundamental economic activity.

As described herein, a specific computing system is implemented to identify miscategorizations and notify a user or another system of such miscategorizations. While various categorization problems suitable for a system to identify miscategorizations may include the categorization of articles based on titles or the categorization of products based on a description or title of the product, for clarity and succinctness in explaining aspects of the present disclosure, various examples disclosed herein are regarding the categorization problem of assigning vendors to book transactions. For example, the computing system may be configured to identify incorrect vendor assignments for one or more book transactions of a ledger.

Regarding the categorization problem of vendor assignments, a user is associated with a plurality of financial transactions. For example, the user (which may be a business, individual, or other entity) may have a checking account from which payments are made to various vendors. Example transactions for an individual include fueling an automobile, eating out at a restaurant, buying groceries at a grocery store, paying rent, or paying insurance. Example transactions for a business include buying supplies from one or more suppliers, paying rent, paying insurance, paying caterers, paying a cleaning service, or paying utilizes. The vendors are those entities being paid via the financial transactions. The financial transactions are summarized to the user, such as in a monthly statement or an on demand summary.

In one specific example, QuickBooks^{®} Online (QBO) is bookkeeping software for a user to manage finances. QBO may generate a ledger for the user, with the ledger including book transactions that correspond to the financial transactions across one or more accounts. In managing the ledger over time, QBO may periodically retrieve an electronic summary over a communications network from the institution having the account (such as a bank or a credit card company) summarizing the financial transactions occurring for that account over a defined time period (such as the last month). QBO may thus generate a new book transaction in the ledger for each new financial transaction summarized in the electronic summary (such as a bank statement or a credit card statement).

The electronic summary is organized into fields of text for each financial transaction. For a financial transaction, the fields of text include at least a company identification (ID) field, a description field, a memorandum (memo) field, and a vendor field. The company ID field includes an account specific identification of the company receiving the payment (such as a unique number or label used by the institution to identify the specific company). The description field includes a unique description of the transaction in a format defined by the institution. The memo field includes text provided by the user or by the institution to provide more context regarding the specific transaction. The vendor field includes identifiable information regarding the vendor (such as a name input by the user for the vendor, a name provided by the vendor to describe itself, or a name automatically assigned by the institution based on previous transactions having the same company ID). In addition to the four fields described above, an electronic summary for a financial transaction may include, e.g., an amount field, a date field, or other fields as formatted by the institution or as requested by QBO (or another suitable software or service).

Typically, after the book transactions are generated in QBO, a user manually assigns a vendor to each of the generated book transactions. For example, the book transaction includes a vendor field for the user to enter free-form text to assign the vendor and thus categorize the book transaction. However, the book transaction may be incorrect, such as being based on incorrect or misunderstood text in a vendor field of the financial transaction or even a person misremembering the transaction itself. As such, it is desirable for QBO to include or link to a feature to identify when book transactions are miscategorized with incorrect vendors. With QBO used by millions of users (with each user having tens, hundreds, thousands, or even more transactions categorized), it may be appropriate for the identification of miscategorizations to be efficient and objective across a large number of users and types of transactions. Implementations as described herein are with reference to one transaction for clarity in explaining aspects of the present disclosure, with the particular system implemented to scale to process any desired number of transactions. While a system may be described as identifying incorrect vendor assignments, the system may be implemented to scale for any suitable categorization problem based on the training of the natural language processing (NLP) models of the system and the configuration of text inputs to the system.

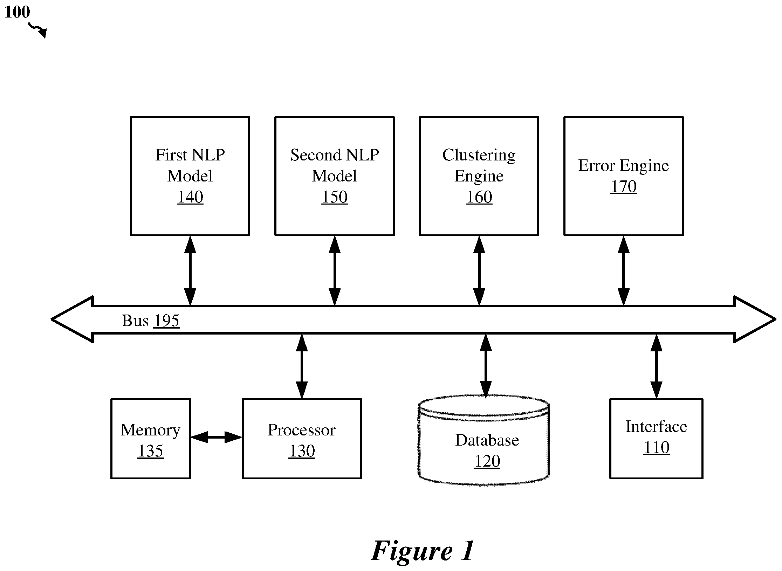

Figure 1 shows an example system 100 for identifying miscategorizations, according to some implementations. For example, the system 100 may be configured to identify vendor miscategorizations for book transactions. In another example, the system 100 may be configured to identify the miscategorization of articles organized on a website or objects organized for an electronic merchant (or other suitable categorization problem miscategorizations). The system 100 includes an interface 110, a database 120, a processor 130, a memory 135 coupled to the processor 130, a first natural language processing (NLP) model 140, a second NLP model 150, a clustering engine 160, and an error engine 170. In some implementations, the various components of the system 100 may be interconnected by at least a data bus 195, as depicted in the example of Figure 1. In other implementations, the various components of the system 100 may be interconnected using other suitable signal routing resources.

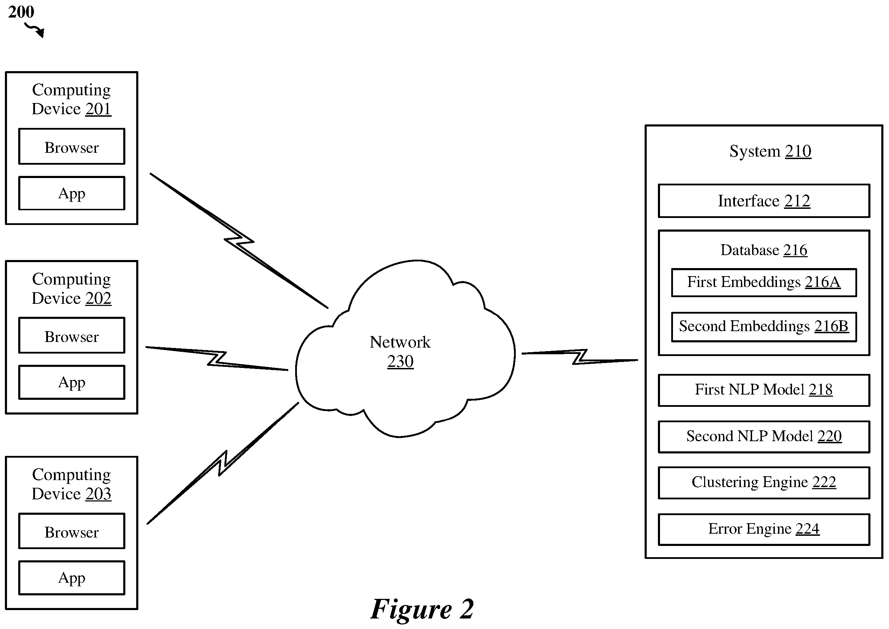

The interface 110 may be one or more input/output (I/O) interfaces to obtain data for the categorization problem, including categorizations, descriptions, and other text associated with the objects being categorized, and provide indications or other information to users or to other systems regarding identified miscategorizations. The interface 110 may also receive updates or instructions for configuring the one or more NLP models or other components of the system 100, or receive or provide inputs or outputs for continued operation of the system 100. An example interface may include a wired interface or wireless interface to the internet or other means to communicably couple with other devices. In some implementations, the interface 110 may include an interface with an ethernet cable or a wireless interface to a modem, which is used to communicate with an internet service provider (ISP) directing traffic to and from other devices. For example, if the system 100 is configured to execute the QBO platform, the interface 110 may couple with systems of one or more financial institutions to retrieve summaries of financial transactions (referred to herein simply as retrieving the financial transactions). In another example, if the system 100 is configured to couple with a news aggregation website, the interface 110 may couple with the system hosting the website to retrieve the articles and categorizations made for such articles. The interface 110 may also couple with a remote user system (which may also be referred to as a user computing device) to provide indications of miscategorizations to the user. For example, the QBO platform may be remote to a user using the platform, with the user using a web browser or application on a user computing device to access the QBO platform executed on the system 100 via a communications network. The remote distribution of the system 100 and one or more computing devices (including a user computing device) over a communications network is described below with reference to Figure 2. The interface 110 may also include a display, a speaker, a mouse, a keyboard, or other suitable input or output elements that allow interfacing with a user (such as to display an indication of a miscategorization or provide an audible notification indicating such).

The database 120 may store information regarding the objects to be categorized (such the descriptions or other text of the objects). The database 120 may also store embeddings or other outputs of the first NLP model 140 and the second NLP model 150, cluster information regarding clusters generated by the clustering engine 160 (such as various centers of the clusters), identified miscategorizations, or other information for operation of the system 100. In the example of vendor miscategorizations for book transactions, the database 120 may store financial transactions (such as information from bank statements) for one or more users, ledgers (including book transactions) for one or more users, financial transaction vectors or other outputs of the first NLP model 140, vendor vectors or other outputs of the second NLP model 150, cluster information regarding financial transaction clusters generated by the clustering engine 160 (including the financial transaction vector center and the vendor vector center of the clusters), and identified vendor miscategorizations. In the example of article miscategorizations, the database 120 may store the articles, the descriptions of the articles (such as the titles, summaries, or other text), title vectors output by the first NLP model 140 if categorized by title, summary vectors output by the second NLP model 150 if the summary is used to verify the categorization by title, cluster information regarding article clusters (including the title vector center and the article vector center), and identified article miscategorizations. The database 120 may also store hyperparameters configured for the models 140 and 150, hyperparameters or rules configured for the clustering engine 160, rules configured for the error engine 170, or other computer executable instructions or data for operation of the system 100. In some implementations, the database 120 may include a relational database capable of presenting information (such as financial transactions included in a cluster, book transactions associated with the cluster, information regarding each cluster, or other information stored in the database 120) as data sets in tabular form and capable of manipulating the data sets using relational operators. The database 120 may use Structured Query Language (SQL) for querying and maintaining the database 120.

The processor 130 may include one or more suitable processors capable of executing scripts or instructions of one or more software programs stored in system 100 (such as within the memory 135). For example, the processor 130 may be capable of executing one or more applications, the first NLP model 140, the second NLP model 150, the clustering engine 160, and the error engine 170. The processor 130 may include a general purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In one or more implementations, the processors 130 may include a combination of computing devices (such as a combination of a DSP and a microprocessor, a plurality of microprocessors, one or more microprocessors in conjunction with a DSP core, or any other such configuration).

The memory 135, which may be any suitable persistent memory (such as non-volatile memory or non-transitory memory) may store any number of software programs, executable instructions, machine code, algorithms, and the like that can be executed by the processor 130 to perform one or more corresponding operations or functions. For example, the memory 135 may store the one or more applications, the first NLP model 140, the second NLP model 150, the clustering engine 160, and the error engine 170 that may be executed by the processor 130. The memory 135 may also store inputs, outputs, or other information associated with the components 140-170 of the system 100 or any other data for operation of the system 100. In some implementations, hardwired circuitry may be used in place of, or in combination with, software instructions to implement aspects of the disclosure. As such, implementations of the subject matter disclosed herein are not limited to any specific combination of hardware circuitry and/or software.

The first NLP model 140 is configured to generate an embedding for each object to be categorized. To generate the embedding, the first NLP model 140 receives a description of the object, which is a natural language text, as input, tokenizes the text, and vectorizes the tokens to generate a vector representative of the input. For example, the first NLP model 140 may be a pretrained Bidirectional Encoder Representations from Transformers (BERT) model that is fine-tuned to generate an embedding as a vector of tokens (i.e., a token vector) from natural language text provided as input to the BERT model. To note, the first NLP model 140 is fine-tuned specifically to the categorization problem to be managed. For example, if the system 100 is to identify miscategorizations of articles, the portions of text of previous articles used to generate token vectors and the desired token vectors themselves may be used as a tuning data set to fine-tune the first NLP model 140 to optimize generation of the token vector by the first NLP model 140. If the system 100 is to identify vendor miscategorizations for book transactions, the portions of previous financial statements used to generate the token vectors and the desired token vectors for the previous financial statements may be used as a tuning data set to fine-tune the first NLP model 140.

In the example of identifying an incorrect vendor assignment (or other assignment, such as a type of transaction) for a book transaction or an associated financial transaction, the first NLP model 140 generates an embedding for the financial transaction, with the embedding to be used for clustering the financial transaction with other financial transactions. To generate the embedding for a financial transaction, in some implementations, the system 100 provides one or more of the description field or the memo field of the financial transaction to the first NLP model 140. For example, the system 100 may concatenate the text in the description field and in the memo field, with the concatenated text being provided as an input to the first NLP model 140. The first NLP model 140 thus generates an embedding (such as a token vector) of the financial transaction from the received text. With the description field being provided to the first NLP model 140, the embedding is based on the description of the financial transaction.

In the example of identifying an article as being miscategorized based on title, the first NLP model 140 generates an embedding for the article, with the embedding to be used for clustering the article with other articles. To generate the embedding for an article, in some implementations, the system 100 provides the title of the article to the first NLP model 140. The first NLP model 140 thus generates an embedding (such as a token vector) of the article from the received text. With the article's title being provided to the first NLP model 140, the embedding is based on the title.

Referring to the clustering engine 160, the clustering engine 160 is configured to assign a categorized object to one of a plurality of clusters of categorized objects based on the embedding generated by the first NLP model 140 for the categorized object and the embeddings for the other objects in the plurality of clusters. In some implementations, the clustering engine 160 also generates the clusters of objects. For example, with the embeddings being token vectors, vector distances between token vectors may be used as a metric to cluster the token vectors. In some implementations, the clustering engine 160 performs fuzzy clustering of the token vectors to determine an optimum number of clusters and to generate the clusters. In some implementations, the clustering may be density based, with density thresholds used to generate clusters and assign vectors to generated clusters.

The clusters are based on embeddings of objects over a defined time period. For the example of identifying vendor miscategorizations, the system 100 may retrieve the last two years of financial statements and generate an embedding as a token vector for each of the financial transactions in the two years of financial statements. The system 100 may then cluster the transactions associated with the embeddings for the last two years of financial transactions. For the example of identifying article miscategorizations, the system 100 may retrieve the articles since inception of the database storing the articles and generate an embedding as a token vector for each of the articles. The system 100 may then cluster the embeddings of the articles over that time period. To note, the time period may be any suitable time period, such as one week, one month, one year, one decade, or another suitable time period. The clusters may be updated on demand or periodically as new objects (such as new book transactions or new articles) are to be categorized. To note, the terms "clustering objects" and "clustering embeddings" are used synonymously herein.

Each cluster includes a center. In some implementations, with an embedding being a vector, the cluster center is the average vector across all of the vectors of the objects included in the cluster. In some other implementations, the cluster center may be the median vector (or another suitable representation of a centroid if the cluster of vectors is treated as a geometric object). Such centers may be stored in the database 120. For example, the database 120 may include one or more tables identifying the clusters and the cluster center calculated for each identified cluster. In the example of identifying vendor miscategorizations, each financial transaction may be associated with multiple table entries of one or more tables stored in the database 120. For example, for a financial transaction, one entry may include a table row including the company ID field, the description field, the memo field, the vendor field, and the first embedding of the financial transaction. Another table entry for the financial transaction may include the description field, the memo field, and a cluster ID field identifying the cluster to which the transaction is assigned. Each cluster is also associated with a table entry in one or more tables, with the table entry including the cluster ID field and a first center field indicating the first center of the cluster. In the example of identifying article miscategorizations, each article may be associated with multiple table entries of one or more tables stored in the database 120. For example, for an article, one entry may include a table row including information about one or more of the title, the authors, the summary, the introduction, and body of the article. Another table entry for the article may include the title field and a cluster ID field identifying the cluster to which the article is assigned. Each cluster is also associated with a table entry in one or more tables, with the table entry including the cluster ID field and a cluster center field indicating the center of the cluster.

To assign an object associated with an embedding generated by the first NLP model 140 to a cluster, the clustering engine 160 may calculate the distance between the embedding and the center of one or more of the clusters and compare the distance to a threshold. For example, if ten clusters are included in the table stored in the database 120, the clustering engine 160 may retrieve the ten centers from the table and calculate the distance between the embedding and each of the ten centers. The clustering engine 160 may compare the ten distances to each other and assign the object associated with the embedding to the cluster associated with the smallest distance (and thus the threshold being the smallest of the ten distances). The clustering engine 160 may also compare the smallest distance to an absolute threshold to ensure that the embedding is within a maximum desired distance from the center in order to be assigned to the cluster. To note, if an embedding is assigned to the cluster, the clustering engine 160 may update the cluster center based on the cluster receiving a new embedding.

In some other implementations of assigning an object associated with an embedding to a cluster, the clustering engine 160 may perform a greedy algorithm or another suitable algorithm to arrive at a good enough solution based on the embeddings to assign the object to a cluster. For example, the clustering engine 160 may select a first cluster and calculate a distance between the center of the first cluster and the embedding of the object. The clustering engine 160 may then compare the distance to a defined threshold. If the distance is greater than the threshold, the clustering engine 160 may move onto a second cluster and perform the same operations. If the distance is less than the threshold, the clustering engine 160 may assign the first embedding to the first cluster (or to the subsequent cluster for which the distance is less than the threshold). In another example, a first subset of clusters may be selected by the clustering engine 160, with a distance being calculated for each of the clusters. If the smallest distance is less than the defined threshold, the clustering engine 160 assigns the first embedding to the corresponding cluster. Otherwise, a next subset of clusters may be selected, with the operations repeated until a smallest distance is found to be less than the defined threshold. To note, in some instances, an object may not be assigned to a cluster if all calculated distances for the clusters are greater than the threshold. In some implementations, the system 100 may generate an indication as to the objects that were not assigned to a cluster, and the system 100 might not attempt to identify whether such objects are miscategorized.

To note, the distance between embeddings indicates the similarity between the embeddings. As such, the distance thresholds used to determine whether an object is to be included in a cluster is a threshold used to indicate whether one embedding is considered similar or not similar to a cluster center (such as an average embedding for the cluster). The thresholds may be defined at configuration of the system 100 (such as based on trial and error in an attempt to optimize the clustering). Additionally or alternatively, the thresholds may be adjusted by a user as desired. Similarly, all other thresholds used by the system 100 (such as to identify a miscategorization as described below) may be defined at configuration and/or adjustable at a later time.

To note, if the clustering engine 160 assigns objects to clusters based on calculating distances between vectors and comparing the distances to thresholds without reference to how or on what text the vectors were generated, the clustering engine 160 is categorization problem agnostic. For example, irrespective of whether the first NLP model 140 is configured to generate first embeddings for financial transactions or first embeddings for articles, the clustering engine 160 is able to cluster the objects based on the resulting embeddings generated by the first NLP model 140.

Referring to the second NLP model 150, the second NLP model 150 is configured to generate another embedding of the object unique from the embedding generated by the first NLP model 140 described above based on a different description of the object. For example, if the first NLP model 140 is to generate an embedding from a title of an article, the second NLP model 150 may generate a different embedding from a summary of the article. In another example, if the first NLP model 140 is to generate an embedding from text in a description field of a financial transaction, the second NLP model 150 may generate a different embedding from text in a vendor field of the financial transaction. With the embeddings generated by the first NLP model 140 used to cluster the objects, the embeddings generated by the second NLP model 150 are used to identify whether the objects are miscategorized based on those clusters. As with the first NLP model 140, to generate the embedding by the second NLP model 150, the second NLP model 150 receives a natural language text as input, tokenizes the text, and vectorizes the tokens to generate a vector representative of the input. For example, the second NLP model 150 may also be a pretrained BERT model that is fine-tuned to generate an embedding as a token vector from natural language text provided as input to the BERT model. Similarly, the second NLP model 150 is fine-tuned specifically to the categorization problem to be managed.

In some implementations, the first NLP model 140 and the second NLP model 150 may be the same model, or alternatively may be duplicate instances of the same model. If the same or identical NLP model is used to generate both embeddings, the embeddings of an object differ based on different text as input to the model. For example, for an article, a first input used to generate a first embedding may be an executive summary or content of the article, and a second input to generate a second embedding may be the title of the article. In the example of vendor categorization, a first embedding may be based on text from the description field of a financial transaction, and a second embedding may be based on the vendor field of the financial transaction. For example, the system 100 may provide the text of the vendor field to the second NLP model 150 (which may be the same model as the first NLP model 140 or another instance of the first NLP model 140). The second NLP model 150 may thus tokenize and vectorize the text in the vendor field to generate the second embedding. In this manner, the second embedding is based on the text in the vendor field of the financial transaction. Alternative to just providing text from the vendor field to the second NLP model 150, the system 100 may provide text included in other fields other than the vendor field in addition to the text in the vendor field. For example, the system 100 may concatenate the text in the company ID field and the vendor field and provide the concatenated text to the second NLP model 150 to generate the second embedding.

With each object being associated with a first embedding and a second embedding, each first embedding of an object clustered in the plurality of clusters is associated with a second embedding. If the clusters are generated based on distances between first embeddings, the clusters are based on the similarity of text used to generate the first embeddings. Similarly, the distance between the second embeddings indicate the similarity of text used to generate the second embeddings.

To generate the second cluster center, the clustering engine 160 receives the second embeddings associated with each of the objects included in the cluster and calculates the second cluster center from the second embeddings. The second cluster center may be calculated in the same manner as the first cluster center (also referred to herein as a first center), such as being the embedding (such as an average vector) or the median embedding (such as a median vector) across the embeddings. The table in the database 120 storing the cluster centers may store the first cluster centers and the second cluster centers for access by the clustering engine 160, the error engine 170, or other components of the system 100. For example, a table entry for a cluster including the cluster ID field may include a first center field and a second center field. Regarding the vendor miscategorization example, a financial transaction may also be associated with another table entry including the company ID field, description field, memo field, vendor field, and a second embedding field to include the second embedding generated by the second NLP model 150. In some implementations, one table entry may include both a first embedding field and a second embedding field to include both embeddings. In some other implementations, separate table entries may exist for each of the first embedding and the second embedding (with some fields being repeated between the table entries). However, with the clustering engine 160 being categorization problem agnostic, the calculation of the second cluster centers based on vector distances is independent of the categories and objects of the categorization problem. As such, with the NLP models 140 and 150 (which may be a single model) fine-tuned to receive specific text and generate desired embeddings, the system 100 is able to identify miscategorizations for various categorization problems.

Referring to the error engine 170, the error engine 170 is configured to identify the miscategorization of objects. It is assumed that the second embeddings of objects in a cluster having similar first embeddings should also be similar. If a second embedding is not similar to the other second embeddings of objects in the cluster, the object may be miscategorized. For example, if articles are categorized by title and titles are used to generate the first embeddings used for clustering, articles cluster together should be on a similar topic, and the summaries used to generate the second embeddings of articles clustered together should also be similar. As such, the system 100 uses distances between second embeddings of the objects clustered based on the first embeddings to identify potential miscategorizations. For example, with each cluster including a first cluster center based on the first embeddings (such as an average of the first embeddings), each cluster may also include a second cluster center (also referred to as a second center) based on the second embeddings. Identifying a miscategorization of an object is based on a second distance between a second embedding of the object and the second cluster center of the cluster to which the object is assigned. For example, for vendor miscategorizations, if the second distance is greater than a defined threshold, the text in the vendor field for the financial transaction is not sufficiently similar to the text in the vendor fields of other financial transactions in the same cluster. To note, a user categorizing a book transaction typically relies on the description field or the memo field of the financial transaction (which may be imported by QBO or another suitable tool as a description field or memo field of the corresponding book transaction from which the user reviews). As such, if the user relies on the description or memo text in the book transaction to assign a vendor, the vendor may be similar to vendors of the other financial transactions of the same cluster with the corresponding financial transaction. However, if the distance between a second embedding for the financial transaction corresponding to the book transaction and the second cluster center of the cluster to which the financial transaction is clustered is greater than a defined threshold, the user may have assigned an incorrect vendor to the book transaction (since the book transaction vendor is similar to the vendors for the other financial transactions in the cluster and the vendor field text for the corresponding financial transaction is dissimilar to the vendor field texts of the other financial transactions in the cluster).

In some implementations, the error engine 170 receives a second embedding of an object and an indication as to with which cluster the second embedding is associated. To identify whether the object is miscategorized, the error engine 170 may retrieve the second center for the cluster based on the indication (such as from the table stored in the database 120 or from the clustering engine 160), calculate a second distance between the second embedding and the second center, and compare the second distance to a defined threshold. If the distance is greater than the threshold the error engine 170 identifies that the object is potentially miscategorized. As such, the error engine 170 may generate an indication that the object is miscategorized, which may be provided to the user or another system via the interface 110. An indication may be a visible or audible notification, or instructions used by another device to alert a user. In some implementations, the system 100 uses the interface 110 to transmit the indication over a communications network to a user computing device in order to indicate the miscategorization of one or more objects to a user by that computing device (such as the user's device providing a visual or audible notification after receiving the indication from the system 100 via the communications network).

As noted above, the thresholds used for clustering and for identifying miscategorizations may be defined in any suitable manner. For example, the thresholds may be defined by the developer through observation to optimize the results. Otherwise, the thresholds may be user defined or adjustable as desired. For example, calculating a distance between vectors may be a single value (such as a scalar value), and the threshold may be set to a single value to compare to the distance. If the system 100 generates too many false positives in identifying miscategorizations, the threshold may be increased by a user to increase the tolerance and thus attempt to reduce the number of false positives.

Regarding the categorized objects that are clustered, the clusters may be generated from any set of objects. In some implementations, the clusters are generated from user-specific objects. To note, user-specific refers to the specific user corresponding to the object for which the system 100 is to identify is miscategorized. For example, for the categorization of articles, the articles authored by one author are clustered into user-specific (author-specific) clusters and used to generate the first and second centers of the clusters. Those clusters and centers may then be used by the system 100 to identify whether a new article from the same author that is categorized based on a first description (such as a title) is miscategorized. In another example, for the assignment of vendors to book transactions, the corresponding financial transactions for a single user are clustered and used to generate the first and second centers of the clusters. Those clusters and centers may then be used by the system 100 to identify whether a new book transaction for the same user is miscategorized.

In some other implementations, the clusters are generated from objects over a plurality of users (which are referred to herein as crowd-sourced objects or crowd objects). For example, for the categorization of articles, the articles authored by all authors aggregated across a site may be clustered and used to generate the first and second centers of the clusters. In another example, for the assignment of vendors to book transactions, the corresponding financial transactions across a pool of users that agree to such use of data may be clustered and used to generate the first and second centers of the clusters. To note, the plurality of users (which may be referred to as a crowd) may be bound in any suitable manner, such as across all agreeing users, or further bounded based on geography, demographics, or other bounds. As used herein, "crowd" or "crowd-sourced" refers to any suitable size of a plurality of users, which may be in the thousands, tens of thousands, or more users.

If user-specific data includes enough data points, user-specific data may be more helpful than crowd data in identifying miscategorizations of objects for that user since the user-specific data is more relevant to that user. However, user-specific data may be a sparse data set that can lead to inaccuracies in identifying miscategorizations. For example, a user may not have enough transactions to have a sufficiently populated dataset for use in identifying miscategorizations for book transactions. Alternatively, while crowd data may not be as relevant, the number of data points is much larger than exclusively relying on user-specific data. As such, use of crowd data may overcome the sparsity problem that may occur with using only user-specific data.

Alternative to exclusively using user-specific data or crowd data to identify miscategorizations, in some implementations, the system 100 uses both user-specific data and crowd data to identify miscategorizations. In particular, the clustering engine 160 may generate two sets of clusters: one set of crowd clusters based on the crowd data and one set of user-specific clusters based on the user-specific data. The clustering engine 160 may assign an object to a crowd cluster from the plurality of crowd clusters and to a user-specific cluster from the plurality of user-specific clusters by performing the operations described above regarding assigning an object to a cluster by the clustering engine 160. The error engine 170 may calculate the crowd distance between a second embedding of the object and the second crowd center of the crowd cluster and compare the crowd distance to a crowd threshold. The error engine 170 may also calculate the user-specific distance between the second embedding of the object and the second user-specific center of the user-specific cluster and compare the user-specific distance to a user-specific threshold. The error engine 170 uses the two comparisons to identify miscategorizations. For example, the error engine 170 may indicate a miscategorization if both the crowd distance is greater than the crowd threshold and the user-specific distance is greater than the user-specific threshold. In another example, the error engine 170 may indicate a miscategorization if either the crowd distance is greater than the crowd threshold or the user-specific distance is greater than the user-specific threshold. Two sets of table entries may be stored in the database 120, with one set of table entries corresponding to the crowd data and one set of the table entries corresponding to the user-specific data.

In some implementations, use of crowd clusters and use of user-specific clusters by the system 100 may be performed concurrently in identifying miscategorizations. For example, the two distances may be calculated and compared to the corresponding thresholds (which may be the same or different thresholds) concurrently in identifying whether an object is miscategorized. In some other implementations, the use of crowd clusters and the use of user-specific clusters by the system 100 may be performed sequentially in identifying miscategorizations. For example, the crowd clusters may be used first by the system 100 for an object, with the error engine 170 determining whether the crowd distance is greater than the crowd threshold. If the crowd distance is less than the crowd threshold, it is assumed that the object is correctly categorized, and the system 100 ends its operations for the object. In this manner, additional operations regarding use of the user-specific clusters for the object are not performed, expediting processing for the object. However, if the crowd distance is greater than the crowd threshold, the system 100 may repeat the steps using the user-specific clusters for the object, with the error engine 170 determining whether the user-specific distance is greater than the user-specific threshold. If the user-specific distance is also greater than the user-specific threshold, the error engine identifies the object as being miscategorized. In this manner, the user-specific clusters are used as a check against identified miscategorizations of an object using the crowd clusters.

If multiple sets of clusters are to be used, the cluster information for the sets of clusters may be stored in the database 120. For example, a crowd table and a user-specific table may be stored in the database 120, with each table including an indication of the respective clusters and each cluster's centers. In this manner, the clustering engine 160 may access the corresponding table based on whether to assign an object to a crowd cluster or to a user-specific cluster, and the error engine 170 may access the corresponding table based on whether the second embedding is to be compared to a crowd center of a crowd cluster or to a user-specific center of a user-specific cluster.

While the first NLP model 140, the second NLP model 150, the clustering engine 160, and the error engine 170 are depicted as separate components of the system 100 in Figure 1, the components 140-170 may be included in software including instructions stored in memory 135 or the database 120, may include application specific hardware (e.g., one or more ASICs), or a combination of the above. As such, the particular architecture of the system 100 shown in Figure 1 is but one example of a variety of different architectures within which aspects of the present disclosure may be implemented. In addition, in other implementations, components of the system 100 may be distributed across multiple devices, may be included in fewer components, and so on. While the examples herein are described with reference to system 100, any suitable system may be used to perform the operations described herein. If the components are software, the components may be implemented using any suitable computer-readable language. For example, each of the models 140 and 150 or the engines 160 and 170 and the configuration and interoperability of such models and engines may be programmed in the Python programming language using any suitable libraries.

Figure 2 shows an example network environment 200 for communicating between a miscategorization identification system 210 and other computing devices 201-203, according to some implementations. The miscategorization identification system 210 is an example implementation of the system 100 in Figure 1. As such, the interface 212 is an example implementation of the interface 110, the database 216 (which stores the first embeddings 216A and the second embeddings 216B) is an example implementation of the database 120, the first NLP model 218 is an example implementation of the first NLP model 140, the second NLP model 220 is an example implementation of the second NLP model 150, the clustering engine 222 is an example implementation of the clustering engine 160, and the error engine 224 is an example implementation of the error engine 170. The computing devices 201-203 may include any suitable devices, such as one or more user computing devices (such as personal computers, tablets, smartphones, etc.) or other computing devices (such as a server hosting articles for a website in the article categorization problem or financial institution devices that provide statements of financial transactions for a vendor or transaction type categorization problem). For simplicity in explaining aspects of the present disclosure, the computing devices 201-203 are referred to as user computing devices, with the user computing devices used to communicate with the system 210 (such as to access QBO executed by the system 210 in some implementations).

The computing devices 201-203 can be any suitable wired or wireless computing device that can access and communicate with the system 210 over the communications network 230. Although not shown in Figure 2 for simplicity, each of the computing devices 201-203 includes a user interface through which a respective user can interact. For example, the user interface of a computing device allows a respective user to view a QBO graphical user interface (GUI) provided by the system 210. In various aspects, the user interface may include one or more of a display screen, an audio interface, a virtual reality headset, an augmented reality headset, a digital assistant, a haptic interface, a motion-detection interface, a keyboard, a trackpad, a trackball, a mouse, or a digital brain interface (DBI), among other examples.

In some instances, one or more of the computing devices 201-203 can be a desktop computer, laptop computer, tablet computer, personal digital assistant, cellular telephone, smartphone, electronic book reader, or other suitable device capable of communicating with the system 210. Although only three computing devices 201-203 are shown in the example of Figure 2, in other implementations, any suitable number of computing devices (and other types of computing devices) can be connected to the system 210 over the communications network 230. In addition, although not shown for simplicity, the network environment 200 may include other computing devices, servers, interfaces, or third-party systems, among other examples.

Each of the computing devices 201-203 may include a generic browser through which a respective user can access or login to a platform provided by the system 210 and thereafter interact with the platform (such as QBO). Each of the computing devices 201-203 may also include one or more processors (not shown for simplicity) that can execute a software application (an "App") that allows the respective user to access the platform over the communications network 230. For example, when the App is executed by the one or more processors of computing device 201, the first user can use the App to login into QBO and thereafter interact with QBO to manage a ledger or perform other activities made available by QBO.

As noted above, the system 210 is an example implementation of the system 100 in Figure 1. Referring to the user interface 212, the user interface 212 receives requests from various user computing devices (such as computing devices 201-203), and transmits appropriate responses to the user computing devices over the communications network 230. For example, the user interface 212 may receive requests from user computing devices 201-203 as Hyper-Text Transfer Protocol (HTTP) requests, Application Program Interface (API) requests, or other web-based requests in interacting with a platform hosted by the system 210 (such as QBO). After accepting an HTTP request, the user interface 212 may facilitate communications between the system 210 and the user computing devices 201-203 using one or more Hyper Text Markup Language (HTML) files responsive to the HTTP request. In some instances, the user interface 212 may, in conjunction with an application logic layer (not shown for simplicity), generate the HTML files of the platform as web pages that can be transmitted to the computing devices 201-203 over the communications network 230. The computing devices 201-203 may present the received HTML files as web pages to their respective users, who can interact with the web pages via the user interfaces associated with the computing devices 201-203.

The error engine 224, which identifies an object as being miscategorized, generates an indication of the miscategorization that is transmitted to one of the computing devices 201-203 associated with the user corresponding to the object. For example, if computing device 201 is used by the user to access QBO on the system 210 via the communications network 230, the system 210 transmits the indication of the miscategorization to computing device 201 via the communications network 230. The indication may be an HTML file generated by the error engine 224 or another suitably formatted file readable by the computing device 201 in order to notify the user of the miscategorization (such as via a visual or audible notification at the computing device 201).

The communications network 230 provides communication links between the system 210 and each of the computing devices 201-203. The communications network 230 can be any suitable one or more communication networks including the Internet, a wide area network (WAN), a metropolitan area network (MAN), a wireless local area network (WLAN), a personal area network (PAN) such as Bluetooth^{®}, a portion of the Public Switched Telephone Network (PSTN), a cellular telephone network, a radio access network (RAN) such as a Fifth Generation (5G) New Radio (NR) system, an Ethernet network, a cable network, a satellite network, or any combination thereof.

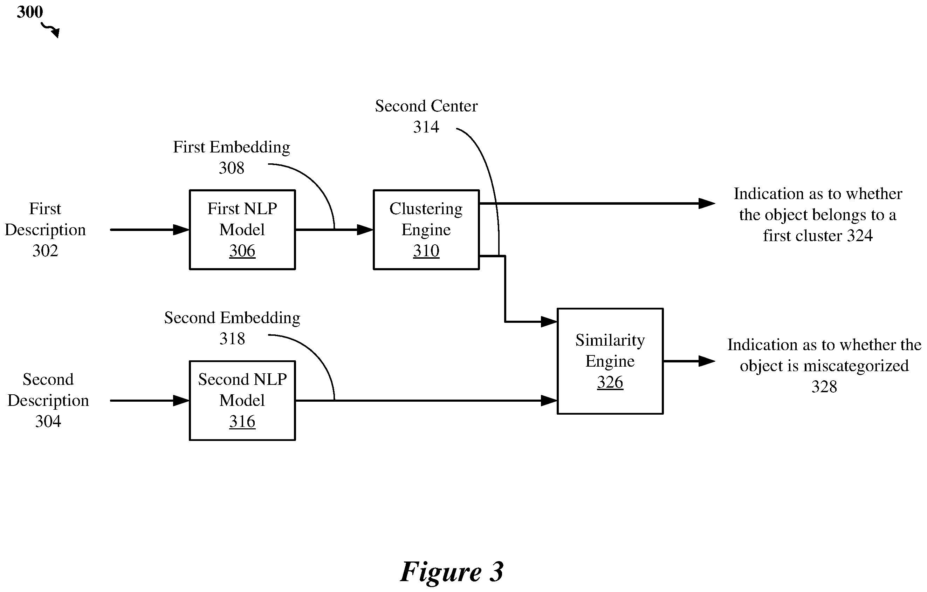

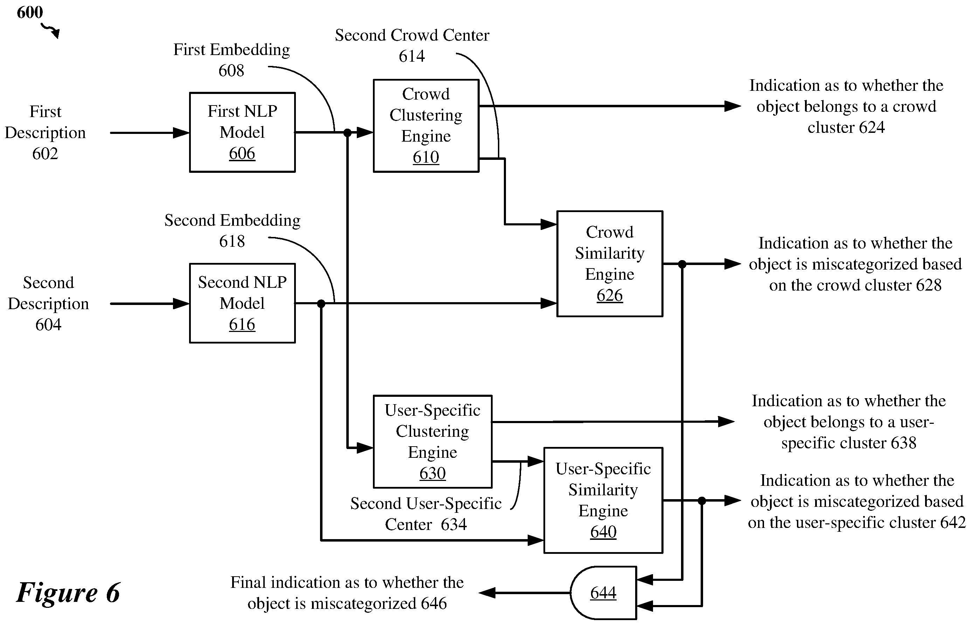

Figure 3 shows an example block diagram 300 for identifying object miscategorizations, according to some implementations. In some implementations, the block diagram 300 is implemented in the system 100 depicted in Figure 1. In such an implementation, the block diagram 300 may be configured to use either crowd data or user-specific data for identifying object miscategorizations (such as incorrect vendor assignments or incorrectly categorized articles). Use of both crowd data and user-specific data is described in more detail below with reference to Figures 6-8. In block diagram 300, the first NLP model 306 may be an example implementation of the first NLP model 140 in Figure 1, and the second NLP model 316 may be an example implementation of the second NLP model 150 in Figure 1. While two separate models 306 and 316 are depicted for clarity, as noted above, in some implementations, the first NLP model and the second NLP model may be the same model. As such, the two models 306 and 316 are depicted separately for clarity in describing the generation of embeddings 308 and 318 from the first description 302 and the second description 304, respectively. The clustering engine 310 may be an example implementation of the clustering engine 160 in Figure 1. The similarity engine 326 may be an example implementation of the error engine 170 in Figure 1.

The example configuration of the system 100 depicted in block diagram 300 retrieves a first description 302 and a second description 304 associated with a categorized object. In the example of assigning a vendor to a transaction, the descriptions 302 and 304 may be text from different fields of a financial transaction (such as from a bank statement received via the interface 110 or information from such statement stored in the database 120). In the example of categorizing articles, the descriptions 302 and 304 may be text from different components of an article (such as the title of the article and the summary of the article). From the descriptions, the example configuration is to output an indication as to whether the object associated with the descriptions 302 and 304 is miscategorized. In the vendor assignment example, the example configuration is to output whether the vendor assigned to the book transaction corresponding to the financial transaction associated with the descriptions 302 and 304 matches the vendor associated with the financial transaction. The indication 328 indicates whether the vendors match and is an indication as to a vendor miscategorization of the book transaction. In the article categorization example, the example configuration is to output the indication 328 indicating whether the article is correctly categorized based on the first description 302. In some implementations, the system 100 may also output an indication 324 as to whether the object associated with the descriptions 302 and 304 (such as a financial transaction or an article) belongs to a cluster (such as indicating that the financial transaction or the article cannot be assigned to a cluster).

Referring to the vendor assignment problem to explain aspects of the present disclosure, the system may be configured to identify if a first vendor assigned to a book transaction is not the same as a second vendor corresponding to the financial transaction associated with the descriptions 302 and 304 for each book transaction to be reviewed. As such, the process described with reference to block diagram 300 is repeated for each book transaction to be reviewed. For a book transaction, the corresponding financial transaction may be retrieved (such as from the database 120) and provided to the first NLP model 306.

In some implementations, one or more of the description field or the memo field of the transaction are provided as the first description 302 to the first NLP model 306. For example, the text in the description field and the memo field may be concatenated and provided to the first NLP model 306. The first NLP model 306 (which may be a BERT model fine-tuned for the vendor categorization problem) tokenizes and vectorizes the input to generate the first embedding 308 as a token vector.

The first embedding 308 is provided to the clustering engine 310, and the clustering engine 310 attempts to assign the first embedding 308 to a cluster of a plurality of clusters of objects. Each cluster of the plurality of clusters includes a subset of a plurality of objects based on first embeddings of the subset of objects generated from first descriptions 302 by the first NLP model 306. For example, the first NLP model 306 generates the first embedding 308 for each of a plurality of financial transactions from the text in the description field of the financial transaction, and the clustering engine 310 clusters the plurality of financial transactions into a plurality of clusters based on the first embeddings (such as described above). Each cluster is also associated with a first center calculated from the first embeddings of the subset of objects. For example, the embeddings of the financial transactions in a cluster may be averaged or a median of those first embeddings may be determined as the first center. As noted above, the clusters may be user-specific clusters based exclusively on user-specific objects (such as user-specific transactions). Alternatively, the clusters may be crowd clusters based on objects from a plurality of users (such as transactions across a plurality of users). As noted above, the implementation in which both user-specific clusters and crowd clusters may be used is described in more detail below with reference to Figures 6-8.

The clustering engine 310 attempts to identify the cluster in which the object associated with the descriptions 302 and 304 is to be included based on the distance between the first embedding 308 and the first center of one or more of the clusters. To identify that the object is to belong to a first cluster of the plurality of clusters, the clustering engine 310 calculates a first distance between the first embedding of the object and a first center of the first cluster. The clustering engine 310 also compares the first distance to a first threshold. The object is included in the first cluster if the first distance is less than the first threshold. As noted above, the clustering engine 310 may calculate a distance between the first embedding 308 and a cluster center for any number of clusters. For example, the clustering engine 310 may calculate a distance for every cluster, with the first embedding 308 being assigned to the cluster associated with the smallest distance calculated by the clustering engine (and thus the threshold being the smallest distance). In another example, the clustering engine 310 may calculate a distance and compare the distance to a defined threshold sequentially across the clusters until the calculated distance is less than the defined threshold.

In some instances, the clustering engine 310 may not find a compatible cluster for the object. For example, the distance between the first embedding and each first center of the clusters may be greater than a maximum threshold. As such, in some implementations, the clustering engine 310 may generate an indication 324 that the object does not belong to a cluster. The indication 324 may alternatively indicate to which cluster the object belongs so that the system 100 may update the data tables stored in the database 120 regarding that cluster.

Assuming that the object is included in a first cluster of the plurality of clusters based on the first embedding 308, the second description 304 of the object is provided to the second NLP model 316 to generate the second embedding 318. As noted above, the first NLP model 306 and the second NLP model 316 may be the same model or identical models, with the contents of the first embedding 308 and the contents of the second embedding 318 differing based on the differences between the descriptions 302 and 304 provided to the model. In the vendor assignment example, the first description 302, and thus the first embedding 308, is based on the description field of a financial transaction, and the second description 304, and thus the second embedding 318, is based on the vendor field of the financial transaction. In some implementations, the text in the vendor field of the financial transaction is provided as input to the second NLP model 316. The text in the vendor field may be provided alone or in combination with text from other fields, such as being concatenated with text from the company ID field or other fields of the transaction. In the article categorization example, the first description 302 may be the article title, with the first embedding 308 being based on the title. The second description 304 may be based on the article summary, with the second embedding 318 being based on the article summary. In some implementations, the text in the article summary is provided as input to the second NLP model 316. The second NLP model 316 tokenizes and vectorizes the text input to generate the second embedding 318 as a token vector.

With the clustering engine 310 having included the object in a first cluster, the clustering engine 310 may provide the second center 314 of the first cluster. For example, the clustering engine 310 may retrieve the second center 314 from the database 120 and provide the retrieved information to the similarity engine 326 in order to compare to the second embedding 318. As noted above, the second center is based on the second embeddings of the objects (such as the financial transactions or the articles) included in the first cluster. For example, after generating clusters of financial transactions, the second NLP model 316 may generate the second embeddings for each of the financial transactions in a cluster, with the generated second embeddings for the cluster being provided to the clustering engine 310. The clustering engine 310 may calculate the second center similar to calculating the first center, such as an average of the second embedding or a median of the second embeddings. In this manner, a second center may be calculated for each cluster and stored in the database 120, such as described above. Specific to the first cluster, the second center 314 is calculated from the second embeddings of the subset of objects clustered in the first cluster.

The similarity engine 326 receives the second embedding 318 and the second center 314 of the first cluster, and the similarity engine calculates a second distance between the second embedding 318 and the second center 314. The similarity engine 326 also compares the second distance to a second threshold to identify whether the object is miscategorized (such as the vendor corresponding to a financial transaction differing from the vendor assigned to a corresponding book transaction). For example, if the second distance is greater than the second threshold, the similarity engine 326 generates the indication 328 that the object is miscategorized (such as the vendors not matching between the book transaction and the financial transaction and thus there being a vendor miscategorization for the book transaction). As noted above, the indication 328 may be provided to a user for one or more vendor miscategorizations (such as being transmitted over a communications network to a user computing device to provide a notification and summary of one or more miscategorizations identified over a period of time or a notification for each miscategorization as they are identified).

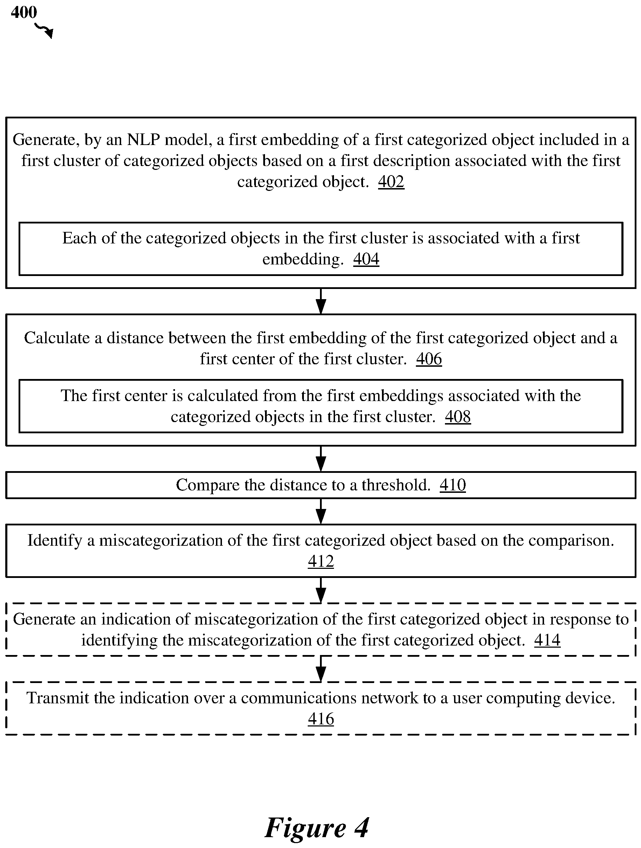

Figure 4 shows an illustrative flow chart of an example operation 400 of identifying object miscategorizations, according to some implementations. The example operation 400 is described as being performed by the computing system 100 to identify an object that is incorrectly categorized based on one description by using a different description of the object. The configuration of the components depicted in the block diagram 300 are used as an example implementation of the system 100 in describing the example operation 400. Operation 400 is performed after categorizing a plurality of obj ects, generating embeddings to cluster the objects (referred to below as second embeddings), and clustering the objects based on the embeddings. Thus, operation 400 is performed to identify whether a first categorized object that is assigned to a first cluster is miscategorized based on that cluster.

At 402, an NLP model generates a first embedding of a first categorized object included in a first cluster of categorized objects based on a first description associated with the first categorized object. To note, before the example operation 400, a second embedding based on a second description is used to cluster the first categorized object into the first cluster. For example, the second NLP model 316 generates a second embedding of the first categorized object based on a second description associated with the first categorized object, with each of the categorized objects in the first cluster also being associated with a second embedding. With the second embedding generated for the first categorized object, the system 100 (such as the clustering engine 310) includes the first categorized object in the first cluster based on the second embedding of the first categorized object and the second embeddings of the categorized objects in the first cluster. To note, in order to cluster a plurality of categorized objects, for each categorized object in the plurality, a second embedding of the categorized object is generated (such as by the first NLP model 306) based on a second description associated with the categorized object. As such, the plurality of categorized objects may be clustered (such as by the clustering engine 310) into a plurality of clusters based on the second embeddings of the plurality of categorized objects.

With the categorized objects clustered and the first categorized object included in a first cluster, the clustering engine 310 provides the second center 314 associated with the cluster including the first categorized object to the similarity engine 326, and at step 402, the second NLP model 316 generates the second embedding 318 based on the second description 304 to be used to identify whether the first categorized object associated with the second description 304 is miscategorized. In the example of identifying miscategorized articles, the descriptions used to categorize the articles and thus be used to generate the embeddings for clustering the articles may be the titles, and the descriptions used to generate the embeddings to identify whether the articles are miscategorized may be the article summaries. In the example of identifying incorrect vendor assignments, the descriptions used to generate the embeddings for clustering financial transactions may be at least the description field of the financial transactions, and the descriptions used to generate the embeddings to identify whether book transactions include an incorrect vendor assignment may be at least the vendor field of the financial transactions.

Each of the categorized objects in the first cluster is associated with a first embedding (404). For example, as noted above, the second NLP model may have been used to generate an embedding for each of the objects in the cluster so that a cluster center may be generated from the embeddings (such as averaging the embeddings to generate an average vector).

At 406, the system 100 calculates a distance between the first embedding of the first categorized object and a first center of the first cluster. The first center is calculated from the first embeddings associated with the categorized objects in the first cluster (408). In the vendor misassignment example, the categorized objects in the first cluster are clustered based on a second embedding generated from the text in at least the description field of the financial transactions. The first embedding is generated from the vendor field text of each financial transaction in the cluster, and the first center is calculated by, e.g., averaging the first embeddings to generate an average vector. The system 100 (such as the similarity engine 326) may thus calculate the distance between the average vector and the first embedding of the first categorized object (which may also be a vector).

At 410, the system 100 (such as the similarity engine 326) compares the distance calculated in step 406 to a threshold. The threshold is to indicate whether the first embedding (and thus the first description) is considered similar to the first center (and thus the first descriptions of the other objects in the cluster). As noted above, the threshold may be configured or adjusted in any suitable manner. At 412, the system 100 (such as the similarity engine 326) identifies a miscategorization of the first categorized object based on the comparison in step 410. For example, if the distance is greater than the threshold, the system 100 identifies that the object is miscategorized (such as a vendor being incorrectly assigned for a book transaction or an article being assigned to an incorrect category).

In some implementations, the system 100 is to generate an indication that an object is miscategorized and transmit the indication to a user computing device in order to notify a user. As such, in some implementations, the system 100 may perform steps 414-416 depicted in Figure 4. At 414, the system 100 may generate an indication of miscategorization of the first categorized object in response to identifying the miscategorization of the first categorized object in step 412. For example, the similarity engine 326 may generate the indication 328 to indicate that the object is miscategorized based on the distance being greater than the threshold. At 416, the system 100 may transmit the indication over a communications network to a user computing device. For example, the system 210 may packetize the indication into one or more packets that are transmitted through the communications network 230 to a user computing device 201, with the user computing device 201 receiving and assembling the packets to receive the indication. The user computing device 201 may process the indication and generate a notification to the user to indicate the misidentification.

To note, operation 400 is depicted with reference to one object to be analyzed as to whether it is miscategorized in clarity in explaining aspects of the present disclosure. Operation 400 may be performed any number of instances to analyze any number of objects (such as any number of transactions).

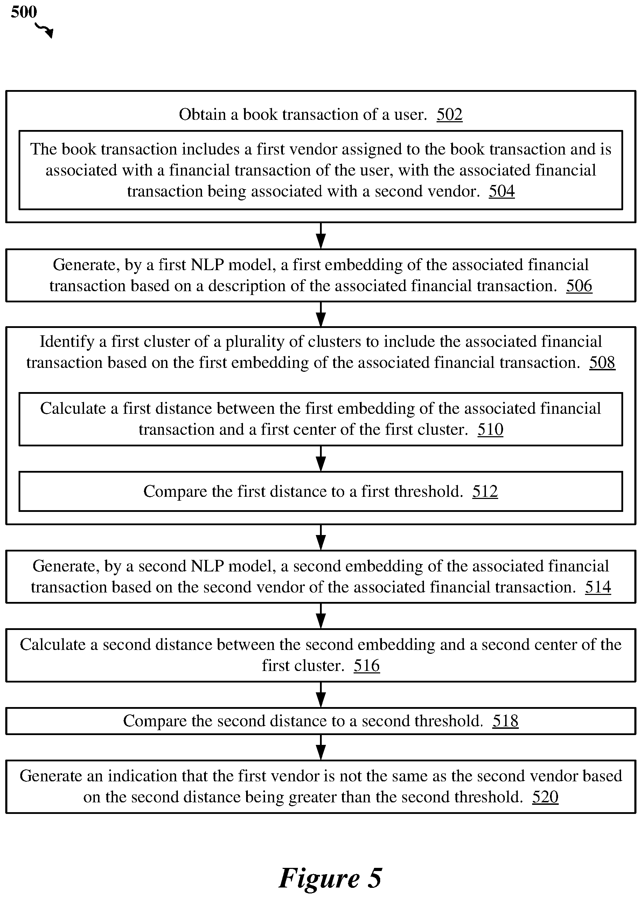

With operation 400 described in general above for any suitable categorization problem, steps of a specific implementation regarding incorrect vendor assignments that may be performed by the system 100 (such as the configuration of the system 100 as depicted in the block diagram 300) are described with reference to Figure 5. To note, though, aspects of the methods described below may be used for various other categorization problems, such as the categorization of articles, products, transaction type, or other objects associated with text such as provided above.

Figure 5 shows an illustrative flow chart of an example operation 500 of identifying vendor miscategorizations, according to some implementations. The example operation 500 is described as being performed by the computing system 100 to identify a vendor assigned to a book transaction not matching a vendor corresponding to the corresponding financial transaction for clarity, with the configuration of the components depicted in the block diagram 300 being used as an example implementation of the system 100.

At 502, the system 100 obtains a book transaction of a user. The book transaction includes a first vendor assigned to the book transaction and is associated with a financial transaction of the user, with the associated financial transaction being associated with a second vendor (504). The system 100 is thus to identify whether the first vendor does not match the second vendor, indicating a vendor miscategorization for the book transaction. To note, while operation 500 is described with reference to one book transaction, operation 500 may be performed for any number of book transactions. For example, after QBO is used to generate one or more book transactions from an obtained financial transactions (such as a bank transaction from a bank statement, with each bank transaction including a description field, a memo field, and a vendor field) and each time a user assigns (or adjusts) a vendor to a created book transaction (such as by typing in a vendor field of the book transaction), the system 100 may perform operation 500 to determine whether the first vendor and the second vendor mismatch. Obtaining a book transaction may include retrieving the book transaction from a ledger stored in the database 120 or receiving the book transaction from another device (such as a remote storage or system) via the interface 110.

At 506, the first NLP model 140 (such as the first NLP model 306) generates a first embedding of the associated financial transaction based on a description of the associated financial transaction. For example, the system 100 identifies the financial transaction associated with the book transaction based on a field in the book transaction indicating the specific financial transaction from which the book transaction is generated. Alternatively, the system 100 may access a table stored in the database 120 linking the financial transactions and the book transactions to lookup the associated financial transaction based on an identification of the book transaction. With the financial transaction identified, the system 100 may retrieve at least a portion of the text of the financial transaction to generate the first embedding. For example, the system 100 may access the identified financial transaction entry stored in a data table in the database 120, identify one or more of the description field or the memo field in the financial transaction entry, and retrieve the text from one or both fields. The system 100 may provide the text (such as a concatenation of text from the description field and the memo field) as a first input to the first NLP model 140, and the first NLP model 140 tokenizes and vectorizes the input to generate a token vector as the first embedding.

At 508, the system 100 (such as the clustering engine 160) identifies a first cluster of a plurality of clusters to include the associated financial transaction based on the first embedding of the associated financial transaction. As noted above, each cluster of the plurality of clusters clusters a subset of a plurality of financial transactions based on first embeddings of the subset of financial transactions generated from descriptions of the subset of financial transactions by the first NLP model. Each cluster also is associated with a first center calculated from the first embeddings of the subset of financial transactions.

To calculate the first centers, the clustering engine 160 may generate the clusters of previous financial transactions (such as based on a defined time period or number of previous financial transactions retrieved and to be clustered). To generate the clusters and calculate a first center for each cluster, the system 100 may perform the following operations. For each financial transaction of the financial transactions to be clustered, the system 100 obtains a first text from one or more of a description field or a memo field of the financial transaction (such as a concatenation of the text from the two fields), and the first NLP model 140 generates a first embedding for each of the financial transactions from the associated first text received as inputs. With the first embeddings generated for each of the financial transactions to be clustered, the clustering engine 160 clusters the plurality of financial transactions based on the first embeddings of the plurality of the financial transactions. For example, the clustering engine 160 may use fuzzy clustering, a clustering machine learning (ML) model, or a defined clustering rule set based on the distances between first embeddings in order to cluster the financial transactions into a plurality of clusters. With the clusters generated, for each cluster, the system 100 (such as the clustering engine 160) may calculate the first center of the first embeddings of the financial transactions included in the cluster. For example, the clustering engine 160 may calculate an average vector or a median vector from the token vectors of the financial transactions in the cluster as the first center. As noted above, a table may be stored in the database 120 to link the clusters to the first centers calculated for the respective clusters.

With the clusters generated and first centers calculated, the system 100 may perform steps 510 and 512 to identify that a first cluster is to include the financial transaction. At 510, the clustering engine 160 calculates a first distance between the first embedding of the financial transaction and a first center of the first cluster. At 512, the clustering engine 160 compares the first distance to a first threshold. As noted above, in some implementations, the clustering engine 160 may generate a first distance between the first embedding and the first center for each cluster to generate a number of distances equal to the number of clusters. In this manner, the first cluster to include the financial transaction may be the cluster associated with the smallest distance (with the first threshold being the smallest distance and assuming that the smallest distance is still less than a maximum threshold distance allowed). Alternatively, the clustering engine 160 may perform steps 510 and 512 sequentially or for a subset of clusters until a distance is found to be below a predefined threshold by the clustering engine 160 in step 512.

As noted above, in some implementations, the clustering engine 160 may be unable to cluster the financial transaction into any cluster. The system 100 may be configured to generate an indication of such for a user (which may be transmitted to a user computing device over a communications network), thus notifying the user of book transactions that cannot be reviewed. Alternatively, the system 100 may skip review of those book transactions.

At 514, the second NLP model 150 generates a second embedding of the financial transaction based on the second vendor of the financial transaction. As noted above, a first vendor is assigned to the book transaction, and the financial transaction is associated with the second vendor. To generate the second embedding, when the system 100 accesses the identified financial transaction entry stored in a data table in the database 120, the system 100 may also identify vendor field in the financial transaction entry, and retrieve the text from the vendor field. The system 100 may thus provide the vendor field text as an input to the second NLP model 150, and the second NLP model 150 tokenizes and vectorizes the input to generate a token vector as the second embedding. As noted above, the first NLP model 140 and the second NLP model 150 may be the same model. For example, a single BERT model fine-tuned for the specific categorization problem (or identical instances of the BERT model) may generate the first embedding and the second embedding based on the different inputs used to generated the different embeddings (such as the description and memo field text input and the vendor field text input, respectively).

With the financial transaction included in the first cluster, at 516, the system 100 (such as the error engine 170) calculates a second distance between the second embedding generated by the second NLP model 150 and a second center of the first cluster. As noted above, each cluster is associated with two centers, the first center, which is calculated from the first embeddings of the financial transactions included in the cluster, and a second center, which is calculated from the second embeddings of the financial transactions included in the cluster. To generate the second center for each cluster, the system 100 may retrieve the vendor field text for each of the financial transactions that are clustered and provide the text as inputs to the second NLP model 150 to generate the respective second embeddings. With the second embeddings generated for the financial transactions, for each cluster, the system 100 (such as the clustering engine 160) may calculate the second center of the second embeddings of the financial transactions included in the cluster. For example, the clustering engine 160 may calculate an average vector or a median vector from the token vectors that are the second embeddings of the financial transactions in the cluster as the second center. As noted above, the table stored in the database 120 to link the clusters to the first centers may also link the clusters to the second centers. In this manner, the clustering engine 160 or the error engine 170 may retrieve from the table the first center or the second center for each cluster as needed. In some implementations, the second distance (and the first distance) is a single value, such as based on Euclidian geometry to calculate a distance between two vectors.

At 518, the error engine 170 compares the second distance to a second threshold. As noted above, the second threshold is a defined threshold that is set or adjusted in any suitable manner (such as the developer or user setting or adjusting the threshold based on previous observations). If the second distance is greater than the second threshold, the system 100 generates an indication that the first vendor is not the same as the second vendor (520). As noted above, the indication is to be provided to the user in order to apprise the user of a potential mismatch in vendors.

Performing operation 500 for a plurality of book transactions may be done on a one by one basis as each book transaction is assigned a vendor. In this manner, a user may receive a notification quickly after assigning a vendor if a vendor mismatch is identified. Additionally or alternatively, performing operation 500 for a plurality of book transactions may be in a batch mode, such as the system 100 processing nightly the book transactions generated that day to attempt to identify one or more vendor mismatches across the batch of book transactions. In this manner, a notification may be transmitted periodically to the user, which may be provided by a user computing device via an email, message, or application alert, to indicate the book transactions for which a vendor mismatch was identified.

The processes described with reference to the block diagrams 100-300 and the operations 400 and 500 may be performed for any number of (such as millions or more) objects (such as transactions) using either crowd objects or user-specific objects to generate the clusters used. Alternatively, crowd objects and user-specific objects may be used to generate two sets of clusters, with both sets of clusters used to identify object miscategorizations. In some implementations, the clusters of crowd objects are used first to identify a potential object miscategorization (such as a potential vendor miscategorization for a book transaction), with the clusters of user-specific objects being used afterwards to verify whether the potential object miscategorization is to be considered an actual object miscategorization (such as a final vendor miscategorization for the book transaction). In some other implementations, both sets of clusters may be used concurrently, with two indications as to potential object miscategorizations being generated. For example, in the example of identifying vendor miscategorizations, both indications must indicate that the vendor assigned to the book transaction is not the same as the vendor corresponding to the financial transaction for a vendor miscategorization to be identified (such as logically ANDing the two indications to generate the final indication). Using both crowd data and user-specific data allows for the better tailored data (the user-specific data) to be used, which may be sparse, while compensating for the sparsity issue through the use of the larger crowd data. For example, user-specific clusters may be sparsely populated based on a sparseness in the number of obj ects, but the clusters may be more compact based on similarities caused by the objects being associated with a same user. Conversely, crowd clusters may be more numerous and more densely populated based on the larger number of categorized objects across the plurality of users, but the clusters may be less compact. As such, the benefits of each type of cluster may be leveraged to compensate for the shortcomings of the other type of cluster in order to improve the identification of miscategorized objects. The use of both crowd clusters and user-specific clusters to identify miscategorizations are described with reference to Figures 6-8.

Figure 6 shows an example block diagram 600 for identifying object miscategorizations based on crowd clusters and user-specific clusters, according to some implementations. In the block diagram 600, crowd objects are used to generate crowd clusters, and user-specific objects are used to generate user-specific clusters. In the example of identifying miscategorized articles, crowd objects may be articles written by any author, while user-specific objects may be articles written by a specific author. In the example of identifying a vendor miscategorization (or a transaction type miscategorization), crowd objects are crowd transactions, which are transactions across a plurality of users, and user-specific objects are user-specific transactions. As such, crowd transactions are used to generate crowd clusters, and user-specific transactions are used to generate user-specific clusters in the example.

In some implementations, the block diagram 600 is implemented in the system 100 depicted in Figure 1. In such an implementation, the block diagram 600 may be configured to use both crowd data and user-specific data for identifying object miscategorizations (such as incorrect vendor assignments). In block diagram 600, the first NLP model 606 may be an example implementation of the first NLP model 140 in Figure 1, and the second NLP model 616 may be an example implementation of the second NLP model 150 in Figure 1. While two separate models 606 and 616 are depicted for clarity, as noted above, in some implementations, the first NLP model and the second NLP model may be the same model. As such, the two models 606 and 616 are depicted separately for clarity in describing the generation of a first embedding 608 and the generation of a second embedding 618 from the descriptions 602 and 604, respectively. The crowd clustering engine 610 and the user-specific clustering engine 630 together may be an example implementation of the clustering engine 160 in Figure 1. To note, the clustering engines 610 and 630 may be the same engine or perform the same operations but on different datasets. However, two separate engines 610 and 630 are depicted for clarity regarding the handling of crowd objects (and thus the use of crowd clusters) and the handling of user-specific objects (and thus the use of user-specific clusters). The crowd similarity engine 626, the user-specific similarity engine 640, and the logic AND gate 644 together may be an example implementation of the error engine 170 in Figure 1. While separate engines 626 and 640 whose outputs are combined using logic gate 644 are depicted as an example implementation for clarity in explaining the operations of the error engine 170, in some implementations, the engines 626 and 640 may be the same engine or perform the same operations but on different datasets. For example, in some implementations of identifying incorrect vendor assignments, the error engine 170 may first use crowd clusters in identifying whether a book transaction includes a potential vendor mismatch, and only if a potential vendor mismatch is indicated, the error engine 170 may then use user-specific clusters to verify whether the book transaction is identified as including a vendor mismatch. In such an implementation, use of both cluster sets must result in the error engine identifying a vendor mismatch in order for the system 100 to generate the indication of the vendor mismatch to be provided to the user. To note, in such a sequence, in some implementations, user-specific clusters are not generated until needed (such as when the error engine 170 identifies a potential vendor mismatch for a book transaction based on the crowd clusters previously generated). Alternatively, the user-specific clusters may be previously generated for the user associated with the specific financial transaction associated with the descriptions 602 and 604.

Referring to the operation of the block diagram 600 in Figure 6, the first NLP model 606 generates the first embedding 608 from the first description 602. The first description 602 is the same as the first description 302 in Figure 3, and the first NLP model 606 is the same as the first NLP model 306 in Figure 3. Thus, the first embedding 608 is the same as the first embedding 308. Similarly, the second NLP model 616 generates the second embedding 618 from the second description 604, with the second description 604 being the same as the second description 304 and the second NLP model 616 being the same as the second NLP model 316 in Figure 3. Thus, the second embedding 618 is the same as the second embedding 318.

The differences between the block diagram 300 and the block diagram 600 are that the clustering engine 310 is replaced with a crowd clustering engine 610 and a user-specific clustering engine 630 and that the similarity engine 326 is replaced with a crowd similarity engine 626 and a user-specific similarity engine 640 (along with logic 644). For example, in block diagram 300, if the clustering engine 310 is configured to generate crowd clusters from crowd financial transactions and first and second crowd centers for the crowd clusters (such as performed by the crowd clustering engine 610 in block diagram 600), a user-specific clustering engine 630 would be added and configured to generate user-specific clusters from user-specific financial transactions and first and second user-specific centers for the user-specific clusters. As noted above, two separate engines 610 and 630 are depicted for clarity in that two different cluster sets are generated and used, but the cluster engine 310 in block diagram 300 may be used to generate both sets of clusters based on two different sets of first embeddings based on two different sets of objects (i.e., crowd objects and user-specific objects). For example, the first crowd embeddings and second crowd embeddings from the crowd objects may be received by the cluster engine 310 to generate crowd clusters and to generate first and second crowd centers for the crowd clusters, and the first user-specific embeddings and the second user-specific embeddings from the user-specific transactions may be separately received by the cluster engine 310 to generate user-specific clusters and to generate first and second user-specific centers for the user-specific clusters.

Similarly, while two separate similarity engines 626 and 640 are depicted for clarity in that two different cluster sets (and their respective second centers) are used to identify object miscategorizations (such as vendor mismatches for a book transaction), the similarity engine 326 in block diagram 300 may be used to perform all of the operations described with reference to similarity engines 626 and 640 (as well as logic 644) to identify a potential miscategorization using both sets of clusters. For example, to identify vendor mismatches, the similarity engine 326 may first identify a potential vendor mismatch for a book transaction using the second crowd center of the crowd cluster in which the corresponding financial transaction is included, and the similarity engine 326 may then verify the vendor mismatch for the book transaction using the second user-specific center of the user-specific cluster in which the financial transaction is included.

Referring back to Figure 6, the first embedding 608 is provided to the crowd clustering engine 610 and the user-specific clustering engine 630. The crowd clustering engine 610 identifies the first crowd cluster in which the object associated with the first description 602 (and the second description 604) is included based on the first embedding 608. The user-specific clustering engine 630 identifies the first user-specific cluster in which the object is included based on the first embedding 608. As noted above, the crowd clustering engine 610 may generate the plurality of crowd clusters. To generate the plurality of crowd clusters, the system may obtain previous categorized objects for a plurality of users (such as previous financial transactions for a plurality of users (crowd financial transactions)) over a period of time (such as two years or another suitable time period). For example, QBO is used by millions of users. A portion of the QBO users may be apprised of and consent to the use of nonsensitive transactions for internal processing in order to improve the user experience (including vendor categorization and mismatch identification). Those transactions over a time period for that portion of QBO users may be included in one or more data tables stored in the database 120, with the system 100 able to access the database 120 and retrieve the previous crowd transactions from the one or more tables (such as retrieving the text from one or more of the description field, the memo field, or the vendor field for each previous crowd transaction). For each of the previous crowd transactions, the system 100 generates the input to the first NLP model 606 (such as concatenating the text from the description field and the memo field) and provides the input to the first NLP model 606. As such, for each previous crowd transaction, the first NLP model 606 generates a first crowd embedding. In the one or more data tables storing the previous crowd transactions, a first crowd embedding field (as well as a second crowd embedding field) may be included to relate the associated crowd embeddings with the corresponding crowd transaction. The crowd clustering engine 610 may thus cluster the previous crowd transactions based on the first crowd embeddings, such as described above with reference to generating clusters by clustering engine 310 in Figure 3.

With the crowd clusters generated, the crowd clustering engine 610 may also calculate a first crowd center for each of the crowd clusters. Calculating a first crowd center of a crowd cluster is the same as calculating a first center of a cluster as described above (such as calculating an average vector or a median vector from the first crowd embeddings included in the cluster). The crowd clustering engine 610 may provide the calculated centers to the database 120 to be stored in one or more data tables. For example, a crowd cluster data table may be stored in the database 120, which includes a crowd cluster ID field to identify the crowd cluster and a first crowd center field to include the calculated first crowd center (as well as a second crowd center field to include a calculated second crowd center).

After the clusters are generated and the crowd centers are calculated, the crowd clustering engine 610 identifies a crowd cluster from the plurality of crowd clusters to include the object based on the first crowd centers and the first embedding 608. For example, the crowd clustering engine 610 calculates a distance between the first embedding 608 and one or more of the first crowd centers (such as described above regarding calculating a distance between a first embedding and a first center with reference to the clustering engine 310 in Figure 3). The crowd clustering engine 610 then compares the distance to a first crowd threshold (such as described above regarding comparing a distance to a threshold with reference to the clustering engine 310 in Figure 3). As noted above, in some implementations, the system 100 may be unable to assign an object to a cluster. As such, in some implementations, the crowd clustering engine 610 may be unable to assign the object to a crowd cluster. For example, the smallest distance between the first embedding 608 and a first crowd center across the plurality of crowd clusters may be greater than a maximum crowd distance threshold allowed. As such, in some implementations, the crowd clustering engine 610 may generate an indication 624 that the object does not belong to any crowd cluster. If use of crowd clusters and user-specific clusters are to both indicate an object miscategorization, the indication 624 that the object does not belong to a crowd cluster may cause the system 100 to terminate review of the current object. Alternatively, the system 100 may attempt to identify an object miscategorization solely based on the use of user-specific clusters. In some implementations, the indication 624 may be provided to a user or another device to indicate that review of a specific object was not comprehensive as a result of being unable to assign the object to a crowd cluster.

Assuming that the object is assigned to a first crowd cluster, the crowd clustering engine 610 is able to retrieve the second crowd center 614 of the first crowd cluster for use in comparing to a second embedding 618 of the object based on the second description 604. To note, the second crowd center 614 of a first crowd cluster is the same as a second center 314 of a first cluster described above with reference to Figure 3. For example, for each crowd cluster, the second NLP model 616 (which may be the same model as the first NLP model 606) generates a second embedding for each of the previous crowd objects in the crowd cluster. For the example of identifying vendor mismatches, to generate a second embedding for each previous crowd transaction, the system 100 may retrieve the text in the vendor field of the previous crowd transaction and provide the text as input to the second NLP model 616. Based on the input, the second NLP model 616 generates the second embedding (such as a second token vector for the previous crowd transaction). The crowd clustering engine 610 may then generate the second crowd center for the crowd cluster, such as by averaging the second embeddings or generating a median vector of the second embeddings. As noted above, the second embeddings may be stored in one or more data tables in the database 120 for the crowd clusters.

With the object assigned to a first crowd cluster, and the crowd clustering engine 610 providing the second crowd center 614, the crowd similarity engine 626 compares the second embedding 618 of the object and the second crowd center 614 to identify a potential object mismatch (such as a potential vendor mismatch between a financial transaction and the corresponding book transaction). Operations of the crowd similarity engine 626 may be the same as the similarity engine 326 described above with reference to Figure 3. As such, the crowd similarity engine 626 may calculate a second crowd distance between the second crowd center 614 and the second embedding 618 and compare the second crowd distance to a second crowd threshold. The crowd similarity engine 626 may thus generate an indication 628 as to a potential object miscategorization if the second crowd distance is greater than the second crowd threshold.

Referring to the use of user-specific clusters to attempt to identify a potential object miscategorization, the user-specific clustering engine 630 identifies a user-specific cluster of the plurality of user-specific clusters to include the object based on the first embedding 608. As compared to the crowd clusters being generated from previous crowd objects, the user-specific clusters are generated from previous user-specific objects. To note, the categorized object associated with the first description 602 and the second description 604 corresponds to a specific user (such as the user for a financial and book transaction, with the user using QBO to generate the book transaction for the financial transaction). To generate the user-specific clusters, the system 100 may obtain previous user-specific objects for that user over a period of time (such the last two years or another suitable time period). For each previous user-specific object, the system 100 may generate the input to the first NLP model 606 (such as obtaining the concatenated text from the description field and the memo field of a transaction for the object being a financial transaction) and provide the input to the first NLP model 606. The first NLP model 606 thus generates a first user-specific embedding based on the input. The system 100 may also generate, for each previous user-specific object, the input to the second NLP model 616 (such as obtaining the text from the vendor field of the transaction for the object being a financial transaction) and provide the input to the second NLP model 616. The second NLP model 616 thus generates a second user-specific embedding based on the input.

Similar to the database 120 storing one or more data tables including previous crowd objects, the database 120 may also store one or more data tables that include previous user-specific objects, with the user-specific objects including fields to include the first user-specific embedding and the second user-specific embedding generated for the user-specific object. As such, in the one or more data tables storing the previous user-specific objects, a first user-specific embedding field (as well as a second user-specific embedding field) may be included to relate the associated user-specific embeddings with the corresponding user-specific object. The user-specific clustering engine 630 may thus cluster the previous user-specific objects based on the first user-specific embeddings, such as described above with reference to generating clusters by clustering engine 310 in Figure 3 and similar to the crowd clustering engine 610, but using the first user-specific embeddings instead of the first crowd embeddings for clustering.

With the user-specific clusters generated, the user-specific clustering engine 630 may also calculate a first user-specific center for each of the user-specific clusters. Calculating a first user-specific center of a user-specific cluster is the same as calculating a first center of a cluster as described above (such as calculating an average vector or a median vector from the first crowd embeddings included in the cluster). The user-specific clustering engine 630 may provide the calculated centers to the database 120 to be stored in one or more data tables. For example, a user-specific cluster data table may be stored in the database 120, which includes a user-specific cluster ID field to identify the user-specific cluster and a first user-specific center field to include the calculated first user-specific center (as well as a second user-specific center field to include a calculated second user-specific center.

After the user-specific clusters are generated and the user-specific centers are calculated, the user-specific clustering engine 630 identifies a user-specific cluster from the plurality of user-specific clusters to include the object based on the first user-specific centers and the first embedding 608. For example, the user-specific clustering engine 630 calculates a distance between the first embedding 608 and one or more of the first user-specific centers (such as described above regarding calculating a distance between a first embedding and a center with reference to the clustering engine 310 in Figure 3). The user-specific clustering engine 630 then compares the distance to a first user-specific threshold (such as described above regarding comparing a distance to a threshold with reference to the clustering engine 310 in Figure 3). As noted above, in some implementations, the system 100 may be unable to assign the object to a cluster. As such, in some implementations, the user-specific clustering engine 630 may be unable to assign the object to a user-specific cluster. For example, the smallest distance between the first embedding 608 and a first user-specific center across the plurality of user-specific clusters may be greater than a maximum user-specific distance threshold allowed. As such, in some implementations, the user-specific clustering engine 630 may generate an indication 638 that the object does not belong to any user-specific cluster. If use of crowd clusters and user-specific clusters are to both indicate a vendor mismatch, the indication 628 that the object does not belong to a user-specific cluster may also cause the system 100 to terminate review of the current object. Alternatively, the system 100 may attempt to identify an object miscategorization solely based on the use of crowd clusters. For example, in attempting to identify vendor mismatches for book transactions, the indication 628 may be provided to a user or another device to indicate that review of a specific book transaction was not comprehensive as a result of being unable to assign the associated financial transaction to a user-specific cluster.

Assuming that the object associated with the descriptions 602 and 604 is assigned to a first user-specific cluster, the user-specific clustering engine 630 is able to retrieve the second user-specific center 634 of the first user-specific cluster for use in comparing to a second embedding 618 of the object based on the second description 604. To note, the second user-specific center 634 of a first user-specific cluster is the same as a second center 314 of a first cluster described above with reference to Figure 3. For example, for each user-specific cluster, the second NLP model 616 (which may be the same model as the first NLP model 606) generates a second embedding for each of the previous user-specific objects in the user-specific cluster. For example, to generate a second embedding for each previous user-specific transaction in attempting to identify vendor mismatches for book transactions, the system 100 may retrieve the text in the vendor field of the previous user-specific financial transaction and provide the text as input to the second NLP model 616. Based on the input, the second NLP model 616 generates the second embedding (such as a second token vector for the previous user-specific transaction). The user-specific clustering engine 630 may then generate the second user-specific center for the user-specific cluster, such as by averaging the second embeddings or generating a median vector of the second embeddings. As noted above, the second embeddings may be stored in one or more data tables in the database 120 for the user-specific clusters.

With the categorized object that is associated with the descriptions 602 and 604 being assigned to a first user-specific cluster, and the user-specific clustering engine 630 providing the second user-specific center 634, the user-specific similarity engine 640 compares the second embedding 618 of the object and the second user-specific center 634 to identify a potential object miscategorization (such as a potential vendor mismatch between the financial transaction and the corresponding book transaction). Operations of the user-specific similarity engine 640 may be the same as the similarity engine 326 described above with reference to Figure 3. As such, the user-specific similarity engine 640 may calculate a second user-specific distance between the second user-specific center 634 and the second embedding 618 and compare the second user-specific distance to a second user-specific threshold. The user-specific similarity engine 640 may thus generate an indication 642 as to a potential object miscategorization if the second user-specific distance is greater than the second user-specific threshold.

To reiterate, the user-specific clustering engine 630 may be the same engine as the crowd clustering engine 610, thus performing the same operations but using different datasets based on whether crowd data or user-specific data is currently being provided. As such, the set of operations for group clusters and the set of operations for user-specific clusters may be performed in succession by a single clustering engine. Similarly, the user-specific similarity engine 640 may be the same engine as the crowd similarity engine 626, thus performing the same operations but using different second centers provided by the clustering engine based on whether group clusters or user-specific clusters are being used at that moment. As such, indications 624 and 638 may be a single indication, and indications 628 and 642 may be another single indication.

To note, the first crowd threshold for assigning the object to a first crowd cluster may be the same or differ from the first user-specific threshold for assigning the object to a first user-specific cluster. Similarly, the second crowd threshold to identify a potential object miscategorization based on a distance between the second embedding 618 and the second crowd center 614 may be the same or differ from the second user-specific threshold to identify a potential object miscategorization based on a distance between the second embedding 618 and the second user-specific center 634. If the first thresholds are to differ and a single clustering engine performs the operations described above for the crowd clustering engine 610 and the user-specific clustering engine 630, the threshold may be configured as a parameter of the single clustering engine, and the single clustering engine may adjust the parameter based on the first centers to be used to compare to the first embedding 608. Similarly, if the second thresholds are to differ and a single similarity engine performs the operations described above for the crowd similarity engine 626 and the user-specific similarity engine 640, the threshold may be configured as a parameter of the single similarity engine, and the single similarity engine may adjust the parameter based on the second centers being received and to be used to compare to the second embedding 618.

As depicted in Figure 6, a final indication 646 as to whether the object is miscategorized depends on both indications 628 and 642 (as depicted by the logic AND gate 644). The logic AND gate 644 outputs the indication 646 of a final object miscategorization

(such as a final vendor mismatch in one example) if both indications 628 and 642 indicate a potential object miscategorization (such as a potential vendor mismatch). If either indication 628 or 642 does not indicate an object miscategorization (such as a distance between the second embedding 618 and one of the second centers being less than a corresponding second threshold), the logic AND gate 644 does not generate an indication 646 of a final object miscategorization (such as a final vendor mismatch between the book transaction and the financial transaction associated with the descriptions 602 and 604).

If both indications 628 and 642 are required to indicate an object miscategorization in order to generate a final indication of an object miscategorization, in some implementations, the indications 628 and 642 are generated in sequence. For example, in attempting to identify a potential vendor mismatch for a book transaction, the system 100 may first identify whether there is a potential vendor mismatch using the crowd clusters and then identify whether there is a potential vendor mismatch using the user-specific clusters. In some implementations, if the system 100 is configured to first generate the indication 628, the system 100 may terminate reviewing the book transaction if a potential vendor mismatch is not identified using the crowd clusters. In this manner, the system 100 may prevent operations regarding the user-specific clusters from being performed (such as attempting to assign the financial transaction to a user-specific cluster and comparing the second user-specific center 634 of an assigned cluster to the second embedding 618 of the financial transaction to generate the indication 642), which may reduce processing resources and time required to review objects.

Referring back to the indication 646, similar to the indication 328 described above and depicted in Figure 3, the indication 646 may be provided to a user or another device to indicate an object miscategorization (such as a vendor mismatch between the financial transaction and the corresponding book transaction). For example, the indication may be transmitted to a user computing device by the system 210 over a communications network 230. As noted above, the notification may be soon after categorizing an object (such as soon after assigning a vendor to a book transaction if the system 100 processes book transactions once vendors are assigned). Alternatively, the system 100 may be configured to perform batch processing of objects, such as reviewing nightly book transactions that were created and assigned a vendor that day in attempting to identify vendor mismatches.

While a logic AND gate 644 is depicted to combine the indications 628 and 642, other suitable logic may be used to generate the indication 646. For example, a logic OR gate may be used if either indication 628 or 642 may cause the final indication 646 to be generated. In another example, the indication 628 may be used as a control to a switch to activate use of the user-specific clustering engine 630 and the user-specific similarity engine 640 to attempt to generate the indication 642.

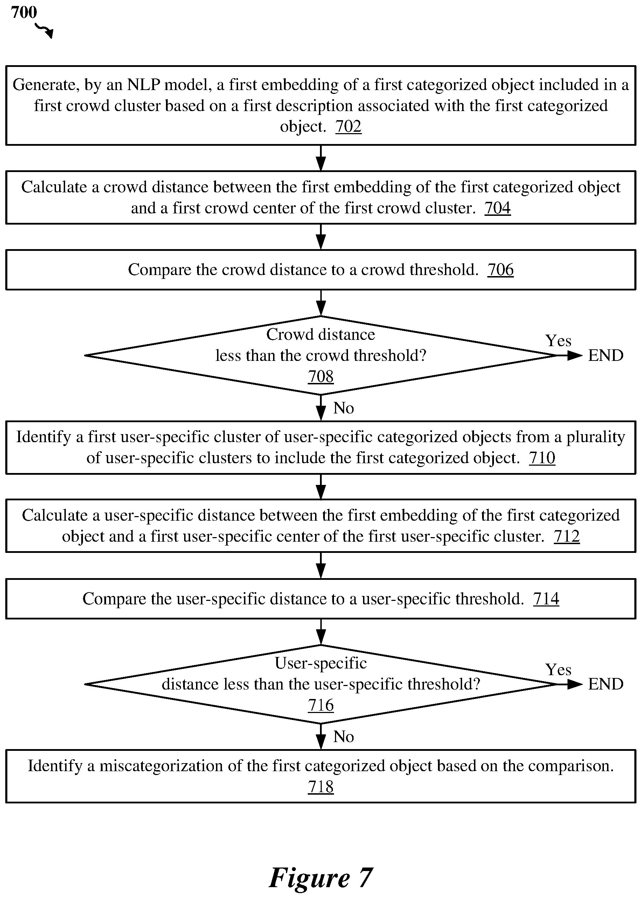

Figure 7 shows an illustrative flow chart of an example operation 700 of identifying object miscategorizations based on crowd clusters and user-specific clusters, according to some implementations. The example operation 700 is described as being performed by the computing system 100 to identify an object that is incorrectly categorized based on one description by using a different description of the object. A final identification of an object miscategorization is also based on an identification of a miscategorization based on a first crowd cluster including the object and an identification of a miscategorization based on a first user-specific cluster including the object (such as both indicating an object miscategorization). The configuration of the components depicted in the block diagram 600 are used as an example implementation of the system 100 in describing the example operation 700. Operation 700 is performed after categorizing a plurality of crowd objects (which may include user-specific objects also used to generate user-specific clusters), generating crowd embeddings to cluster the crowd objects, and clustering the objects into crowd clusters based on the crowd embeddings. Operation 700 is also after generating user-specific clusters for the user-specific objects of the user associated with the first categorized object being analyzed to attempt to identify it being miscategorized. In the example implementation, operation 700 depicts that use of crowd clusters and user-specific clusters are to both indicate an object miscategorization in order to identify the object as miscategorized. In particular, operation 700 depicts first using crowd clusters to identify a potential mismatch, with user-specific clusters then being used to confirm the potential mismatch. As noted above, one or more of the multiple NLP models may be the same model, the multiple clustering engines may be the same clustering engine, or the multiple similarity engines of an error engine 170 may be the same similarity engine.

At 702, an NLP model generates a first embedding of a first categorized object included in a first crowd cluster based on a first description associated with the first categorized object. Step 702 may be the same as step 402 of operation 400 in Figure 4. As such, before the example operation 700, a second embedding based on a second description is used to cluster the first categorized object into the first crowd cluster. For example, the second NLP model 616 generates a second embedding of the first categorized object based on a second description associated with the first categorized object, with each of the categorized objects in the first crowd cluster also being associated with a second embedding. With the second embedding generated for the first categorized object, the system 100 (such as the clustering engine 310) includes the first categorized object in the first crowd cluster based on the second embedding of the first categorized object and the second embeddings of the categorized objects in the first crowd cluster. To note, in order to cluster a plurality of categorized objects, for each categorized object in the plurality, a second embedding of the categorized object is generated (such as by the first NLP model 606) based on a second description associated with the categorized object. As such, the plurality of categorized objects may be clustered (such as by the crowd clustering engine 610) into a plurality of crowd clusters based on the second embeddings of the plurality of categorized objects (with the plurality of categorized objects being crowd objects).

At 704, the system 100 calculates a distance between the first embedding of the first categorized object and a first crowd center of the first crowd cluster. Step 704 is similar to step 406 of operation 400 in Figure 4 if the first cluster in operation 400 is a crowd cluster. As such, the first crowd center is calculated from the first embeddings associated with the crowd objects in the first crowd cluster, such as by averaging the first embeddings to generate an average vector. The system 100 (such as the crowd similarity engine 626) may thus calculate the distance between the average vector and the first embedding of the first categorized object (which may also be a vector).

At 706, the system 100 (such as the crowd similarity engine 626) compares the distance calculated in step 704 to a crowd threshold. Step 706 is similar to step 410 of operation 400 in Figure 4 if the first cluster in operation 400 is a crowd cluster and the threshold is a crowd threshold. As such, the crowd threshold is to indicate whether the first embedding (and thus the first description) is considered similar to the first crowd center (and thus the first descriptions of the other crowd objects in the first crowd cluster). As with the threshold in operation 400, the crowd threshold may be configured or adjusted in any suitable manner.

At decision block 708, if the crowd distance is less than the crowd threshold, the process ends, as the use of crowd clusters did not yield an identification of a potential object miscategorization. In other words, the distance between the first embedding and the crowd center is small enough for the system 100 to consider the second description 604 of the object as being similar to the second descriptions of the other objects in the crowd cluster. Conversely, if the crowd distance is greater than the crowd threshold at decision block 708 (indicating that the second description 604 of the object is considered to be not similar to the second descriptions of the other objects in the crowd cluster), the process continues to step 710, with the use of the first crowd cluster used to identify a potential object miscategorization. Blocks 710-716 of operation 700 focusing on the use of user-specific clusters to confirm the potential object miscategorization as a final miscategorization.

At 710, the system 100 (such as the user-specific clustering engine 630) identifies a first user-specific cluster of user-specific categorized objects from a plurality of user-specific clusters to include the first categorized object. As noted above, the first categorized object is to be included in a crowd cluster and a user-specific cluster. To note, each of the user-specific categorized objects in the first user-specific cluster is associated with a second embedding, and identifying the first user-specific cluster is based on the second embedding of the first categorized object and the second embeddings associated with the user-specific categorized objects in the first user-specific cluster. As such, similar to assigning the first categorized object to the first crowd cluster by the crowd clustering engine 610, the user-specific clustering engine 630 assigns the first categorized object to a first user-specific cluster based on a distance between the second embedding 618 of the object and a user-specific center of embeddings used to cluster the objects into the first user-specific cluster.

With the first categorized object assigned to a first user-specific cluster, at 712, the system 100 (such as the user-specific similarity engine 640) calculates a user-specific distance between the first embedding of the first categorized object and a first user-specific center of the first user-specific cluster. Similar to the crowd cluster, each of the user-specific categorized objects in the first user-specific cluster is associated with a first embedding, and the first user-specific center is calculated from the first embeddings associated with the user-specific categorized objects in the first user-specific cluster (such as an average of the first embeddings across the objects in the user-specific cluster).

At 714, the system 100 (such as the user-specific similarity engine 640) compares the user-specific distance to a user-specific threshold. As noted above, the user-specific threshold is a defined threshold that is set or adjusted in any suitable manner (such as the developer or user setting or adjusting the threshold based on previous observations). Also as noted above, the crowd threshold and the user-specific threshold may differ or be the same.

At decision block 716, if the user-specific distance is less than the user-specific threshold, the process ends, as the use of user-specific clusters did not verify the previous identification of a potential object miscategorization. In other words, while the second description 604 of the first categorized object may differ from the second descriptions of the crowd objects in the first crowd cluster in order to potentially identify a miscategorization of the first categorized object, the distance between the first embedding and the user-specific center is small enough for the system 100 to consider the second description 604 of the object as being similar to the second descriptions of the other objects in the user-specific cluster (thus not verifying the previous findings using the first crowd cluster). Conversely, if the user-specific distance is greater than the user-specific threshold at decision block 708 (indicating that the second description 604 of the object is considered to be not similar to the second descriptions of the other objects in the user-specific cluster), the process continues to step 718. At 718, the system 100 identifies a miscategorization of the first categorized object based on the comparison in step 714.

While not depicted in Figure 7, in some implementations, the system 100 performs operations included in steps 414 and 416 of operation 400 in Figure 4. In particular, the system 100 may generate an indication of the miscategorization of the first categorized object and transmit the indication over a communications network 230 to a user computing device 201 (such as described above with reference to steps 414 and 416).

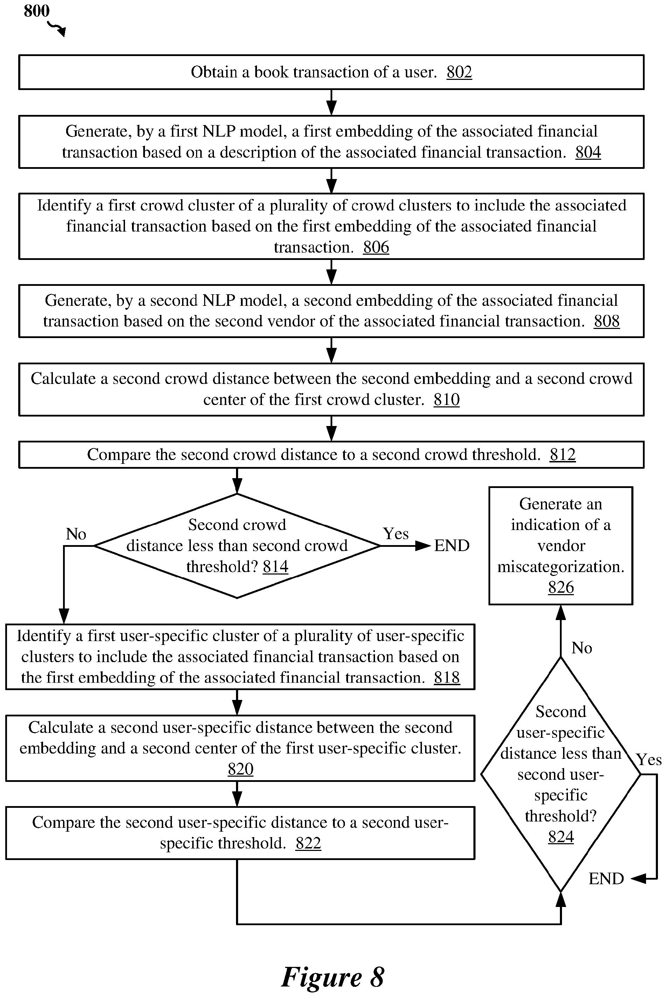

With operation 700 described in general above for any suitable categorization problem, steps of a specific implementation regarding incorrect vendor assignments that may be performed by the system 100 (such as the configuration of the system 100 as depicted in the block diagram 600) are described with reference to Figure 8. To note, though, aspects of the methods described below may be used for various other categorization problems, such as the categorization of articles, products, transaction type, or other objects associated with text such as provided above.

Figure 8 shows an illustrative flow chart of an example operation 800 of identifying vendor miscategorizations based on crowd clusters and user-specific clusters, according to some implementations. Operation 800 depicted in the flow chart in Figure 8 is regarding the use of both crowd clusters and user-specific clusters to identify vendor miscategorizations, and specifically the implementation of sequentially using crowd clusters and then user-specific clusters to identify a vendor mismatch between a book transaction and a financial transaction. Similar to operation 500 in Figure 5, operation 800 may be performed for any number of book transactions (such as millions are more). The example operation 800 is described as being performed by the computing system 100 to identify a vendor assigned to a book transaction not matching a vendor corresponding to the corresponding financial transaction for clarity, with the configuration of the components depicted in the block diagram 600 being used as an example implementation of the system 100. As noted above, one or more of the multiple NLP models may be the same model, the multiple clustering engines may be the same clustering engine, or the multiple similarity engines of an error engine 170 may be the same similarity engine.

At 802, the system 100 obtains a book transaction of a user. Step 802 is the same as step 502 in Figure 5. As such, the book transaction includes a first vendor assigned to the book transaction and is associated with a financial transaction of the user, with the associated financial transaction being associated with a second vendor. The system 100 is thus to identify whether the first vendor does not match the second vendor, indicating a vendor miscategorization for the book transaction. As compared to operation 500, operation 800 relies on both crowd clusters and user-specific clusters to identify whether the first vendor does not match the second vendor.

At 804, the first NLP model 140 (such as the first NLP model 606) generates a first embedding of the associated financial transaction based on a first description 602 of the associated financial transaction. Step 804 is the same as step 506 in Figure 5. At 806, the system 100 (such as the crowd clustering engine 610) identifies a first crowd cluster of a plurality of crowd clusters to include the associated financial transaction based on the first embedding of the associated financial transaction. As noted above, each crowd cluster of the plurality of crowd clusters clusters a subset of a plurality of crowd financial transactions based on first embeddings of the subset of crowd financial transactions generated from descriptions of the subset of crowd financial transactions by the first NLP model. Each crowd cluster also is associated with a first crowd center calculated from the first embeddings of the subset of crowd financial transactions (such as described above).

At 808, the second NLP model 150 (such as the second NLP model 616) generates a second embedding of the financial transaction based on the second vendor of the financial transaction. Step 808 is the same as step 514 in Figure 5. With the financial transaction included in the first crowd cluster, at 810, the error engine 170 (such as the crowd similarity engine 626) calculates a second crowd distance between the second embedding generated by the second NLP model 150 and a second crowd center of the first crowd cluster. As noted above, each crowd cluster is associated with two centers, the first crowd center, which is calculated from the first embeddings of the financial transactions included in the crowd cluster, and a second crowd center, which is calculated from the second embeddings of the financial transactions included in the crowd cluster. To generate the second crowd center for each cluster, the system 100 may retrieve the vendor field text for each of the financial transactions that are clustered and provide the text as inputs to the second NLP model 150 to generate the respective second embeddings. With the second embeddings generated for the financial transactions, for each cluster, the system 100 (such as the clustering engine 160) may calculate the second crowd center of the second embeddings of the financial transactions included in the cluster. For example, the clustering engine 160 may calculate an average vector or a median vector from the token vectors that are the second embeddings of the financial transactions in the cluster as the second center. As noted above, the table stored in the database 120 to link the crowd clusters to the first crowd centers may also link the crowd clusters to the second crowd centers. In this manner, the clustering engine 160 or the error engine 170 may retrieve from the table the first crowd center or the second crowd center for each crowd cluster as needed.

At 812, the error engine 170 (such as the crowd similarity engine 626) compares the second crowd distance to a second crowd threshold. As noted above, the second crowd threshold is a defined threshold that is set or adjusted in any suitable manner (such as the developer or user setting or adjusting the threshold based on previous observations).

Proceeding to decision block 814, if the second crowd distance is greater than the second crowd threshold (and thus is not less than the second crowd threshold), the process proceeds to step 818. The second crowd distance being greater than second crowd threshold means that the error engine 170 (such as the crowd similarity engine 626) identified a potential vendor mismatch between the book transaction and the financial transaction. As such, the system 100 is to use user-specific clusters to verify whether the potential vendor mismatch is an actual vendor mismatch for which an indication of such mismatch is to be generated. Step 818 begins to depict the use of user-specific clusters to verify such vendor mismatches. Referring back to decision block 814, if the second crowd distance is less than the second crowd threshold, then the error engine 170 (such as the crowd similarity engine 626) does not identify a potential vendor mismatch between the book transaction and the financial transaction. As such, the system 100 may terminate operation 800, with a vendor miscategorization not identified for the book transaction.

At 818, with the error engine 170 (such as the crowd similarity engine 626) identifying a potential vendor mismatch based on the use of crowd clusters, the clustering engine 160 (such as the user-specific clustering engine 630) identifies a first user-specific cluster of a plurality of user-specific clusters to include the financial transaction based on the first embedding of the financial transaction. Step 818 is similar to step 806, except that the first embedding is compared to the first user-specific centers of the user-specific clusters instead of the first crowd centers of the crowd clusters. As noted above, each user-specific cluster of the plurality of user-specific clusters clusters a subset of a plurality of user-specific financial transactions based on first embeddings of the subset of user-specific financial transactions generated from descriptions of the subset of user-specific financial transactions by the first NLP model. Each user-specific cluster also is associated with a first user-specific center calculated from the first embeddings of the subset of user-specific financial transactions (such as described above).

With the financial transaction included in a first user-specific cluster, at 820, the error engine 170 (such as the user-specific similarity engine 640) calculates a second user-specific distance between the second embedding generated by the second NLP model 150 and a second user-specific center of the first user-specific cluster. As noted above, each user-specific cluster is associated with two centers, the first user-specific center, which is calculated from the first embeddings of the financial transactions included in the user-specific cluster, and a second user-specific center, which is calculated from the second embeddings of the financial transactions included in the user-specific cluster. To generate the second user-specific center for each cluster, the system 100 may retrieve the vendor field text for each of the financial transactions that are clustered and provide the text as inputs to the second NLP model 150 to generate the respective second embeddings. With the second embeddings generated for the financial transactions, for each cluster, the system 100 (such as the clustering engine 160) may calculate the second user-specific center of the second embeddings of the financial transactions included in the cluster. For example, the clustering engine 160 may calculate an average vector or a median vector from the token vectors that are the second embeddings of the financial transactions in the cluster as the second center. As noted above, the table stored in the database 120 to link the user-specific clusters to the first user-specific centers may also link the user-specific clusters to the second user-specific centers. In this manner, the clustering engine 160 or the error engine 170 may retrieve from the table the first user-specific center or the second user-specific center for each user-specific cluster as needed.

At 822, the error engine 170 (such as the user-specific similarity engine 640) compares the second user-specific distance to a second user-specific threshold. As noted above, the second user-specific threshold is a defined threshold that is set or adjusted in any suitable manner (such as the developer or user setting or adjusting the threshold based on previous observations). Also as noted above, the second crowd threshold and the second user-specific threshold may differ or be the same. Additionally or alternatively, as noted above, the first crowd threshold and the second crowd threshold may differ or be the same.

Proceeding to decision block 824, if the second user-specific distance is greater than the second user-specific threshold (and thus is not less than the second user-specific threshold), the error engine 170 (such as the user-specific similarity engine 640) verifies that the potential vendor mismatch identified at decision block 814 is an actual vendor mismatch between the book transaction and the financial transaction. As such, proceeding to 826, the system 100 generates an indication of the vendor miscategorization (i.e., that the first vendor is not the same as the second vendor). As noted above, the indication is to be provided to the user in order to apprise the user of a potential mismatch in vendors. For example, while not depicted in Figure 8, in some implementations, the system 100 performs operations included in steps 414 and 416 of operation 400 in Figure 4. In particular, the system 100 may generate an indication of the miscategorization of the first categorized object and transmit the indication over a communications network 230 to a user computing device 201 (such as described above with reference to steps 414 and 416) in order for the user computing device 201 to notify the user.

While not depicted in Figure 8, in some implementations, in generating the indication, the system 100 may provide potential vendor replacements for the book transaction based on the vendors associated with the financial transactions clustered with the financial transaction corresponding to the book transaction. In a simple example, if the financial transaction is clustered with 100 other financial transactions, the system 100 may identify the top five (or another number of) most frequent vendors that appear in the cluster and provide those vendors as suggestions to the user. If both crowd clusters and user-specific clusters are used, the system 100 may identify the top vendors in the user-specific cluster since the vendors were probably assigned to previous book transactions.

Additionally or alternatively, the system 100 may maintain a log (such as in the database 120) of the vendor mismatches (or miscategorizations for other categorization problems) identified by the system 100. In some implementations, the log may be used by the system 100 to determine if the thresholds are to be adjusted or to indicate that a manual review of the system 100 may be needed. For example, the log may track the number of book transactions reviewed and the number of miscategorizations identified. If the ratio of miscategorizations to book transactions reviewed for a fixed number of the last book transactions reviewed (or a fixed amount of time) is greater than a defined ratio, the system 100 may generate a query for a user to indicate if the identifications are false positives or if the identifications or correct. If the user indicates that the identifications are false positives (which may be stored in the log), the system 100 may adjust the thresholds to increase the tolerance or may indicate to a developer that review of the system may be needed. Alternatively, for each notification to the user, the user may indicate whether or not the identification of a vendor mismatch is a false positive (which may be stored in the log). If the ratio of false positives to identifications is greater than a threshold ratio over a fixed number of identifications (or fixed amount of time), the system 100 may adjust the thresholds to increase the tolerance or may indicate to a developer that review of the system may be needed. Conversely, if the user indicates incorrect vendors for book transactions not identified by the system 100 as having a vendor mismatch or the user adjusts the vendor for previous book transactions, the system 100 may track such indications or adjustments in the log. If the number of indications or adjustments, or a rate of change in the indications or adjustments, is greater than a threshold, the system 100 may adjust the thresholds to reduce the tolerance.

As described herein, a system 100 may be implemented to manage categorization problems, in particular to identify miscategorizations of objects. In some implementations, the system 100 is implemented to identify vendor mismatches between book transactions and corresponding financial transactions. Through the use of such a system, ledgers and financial records kept for businesses, individuals, or other entities may be more accurate and require less manual review. However, such a system may be used for various categorization problems to automatically identify miscategorizations and thus require less manual review. While many of the examples are described with reference to identifying vendor miscategorizations, as noted herein, the system 100 may be configured to manage any other suitable categorization problem (such as the categorization of articles or other suitable objects). The computing system 100 configured to efficiently and objectively identify miscategorizations of obj ects, especially over a large number of objects (such as millions of objects, which could not be performed manually) increases the accuracy of the solutions to the categorization problem and thus improves a user experience.

As used herein, a phrase referring to "at least one of" or "one or more of" a list of items refers to any combination of those items, including single members. As an example, "at least one of: a, b, or c" is intended to cover: a, b, c, a-b, a-c, b-c, and a-b-c, and "one or more of: a, b, or c" is intended to cover: a, b, c, a-b, a-c, b-c, and a-b-c.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on ad/or be conveyed by a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Therefore from one perspective there have been described systems and methods for managing categorization problem solutions and identifying miscategorizations. The identification of a miscategorization of an object is based on the object's first embedding being different than the first embeddings of other objects in a cluster. The objects in the cluster are clustered together based on second embeddings of the objects, with the first embedding generated based on a first description associated with an object and the second embedding generated based on a second description associated with the object. As such, while the clustering of second embeddings may initially indicate that the objects in the cluster are similar, the comparison between first embeddings of the objects in the cluster (such as calculating a distance between a first embedding and a center of the cluster based on the first embeddings) can confirm whether an object in the cluster is different and thus is potentially miscategorized.

Further examples of feature combinations taught by the present disclosure are set out in the following numbered clauses.

Clause 1. A computer-implemented method for identifying miscategorizations of objects, the method comprising: generating, by a natural language processing (NLP) model, a first embedding of a first categorized object included in a first cluster of categorized objects based on a first description associated with the first categorized object, wherein each of the categorized objects in the first cluster is associated with a first embedding; calculating a distance between the first embedding of the first categorized object and a first center of the first cluster, wherein the first center is calculated from the first embeddings associated with the categorized objects in the first cluster; comparing the distance to a threshold; and identifying a miscategorization of the first categorized object based on the comparison.

Clause 2. The method of clause 1, further comprising: generating, by a second NLP model, a second embedding of the first categorized object based on a second description associated with the first categorized object, wherein each of the categorized objects in the first cluster is also associated with a second embedding; and including the first categorized object in the first cluster based on the second embedding of the first categorized object and the second embeddings of the categorized objects in the first cluster.

Clause 3. The method of clause 2, wherein the NLP model and the second NLP model are the same model.

Clause 4. The method of clause 3, wherein the same NLP model is a pretrained Bidirectional Encoder Representations from Transformers (BERT) model that is fine-tuned to generate embeddings as vectors of tokens from text associated with the categorized objects.

Clause 5. The method of clause 2, 3 or 4, further comprising: for each categorized object of a plurality of categorized objects, generating a second embedding of the categorized object based on a second description associated with the categorized object; and clustering the plurality of categorized objects into a plurality of clusters based on the second embeddings of the plurality of categorized objects, wherein the plurality of clusters includes the first cluster.

Clause 6. The method of any preceding clause, wherein the plurality of categorized objects are exclusively associated with a single user.

Clause 7. The method of any preceding clause, wherein the plurality of categorized objects are associated with a plurality of users.

Clause 8. The method of clause 7, further comprising, in response to identifying the miscategorization of the first categorized object: identifying a first user-specific cluster of user-specific categorized objects from a plurality of user-specific clusters to include the first categorized object, wherein: each of the user-specific categorized objects in the first user-specific cluster is associated with a second embedding; and identifying the first user-specific cluster is based on the second embedding of the first categorized object and the second embeddings associated with the user-specific categorized objects in the first user-specific cluster; calculating a user-specific distance between the first embedding of the first categorized object and a first user-specific center of the first user-specific cluster, wherein: each of the user-specific categorized objects in the first user-specific cluster is associated with a first embedding; and the first user-specific center is calculated from the first embeddings associated with the user-specific categorized objects in the first user-specific cluster; comparing the user-specific distance with a user-specific threshold; and identifying a final miscategorization of the first categorized object based on the comparison of the user-specific distance and the user-specific threshold, wherein the miscategorization of the first categorized object identified based on the comparison of the distance to the threshold is an initial miscategorization that is identified.

Clause 9. The method of clause 8, further comprising: for each user-specific categorized object of a plurality of user-specific categorized objects, generating the second embedding of the user-specific categorized object based on a second description associated with the user-specific categorized object; and clustering the plurality of user-specific categorized objects into the plurality of user-specific clusters based on the second embeddings of the plurality of user-specific categorized objects.

Clause 10. The method of any preceding clause, further comprising: generating an indication of miscategorization of the first categorized object in response to identifying the miscategorization of the first categorized object; and transmitting the indication over a communications network to a user computing device.

Clause 11. A system for identifying miscategorizations of objects, the system comprising: one or more processors; and a memory storing instructions that, when executed by the one or more processors, causes the system to perform operations comprising: generating, by a natural language processing (NLP) model, a first embedding of a first categorized object included in a first cluster of categorized objects based on a first description associated with the first categorized objects, wherein are of the categorized objects in the first cluster is associated with a first embedding; calculating a distance between the first embedding of the first categorized object and a first center of the first cluster, wherein the first center is calculated from the first embeddings associated with the categorized objects in the first cluster; comparing the distance to a threshold; and identifying a miscategorization of the first categorized object based on the comparison.

Clause 12. The system of clause 11, wherein the operations further comprise: generating, by a second NLP model, a second embedding of the first categorized object based on a second description associated with the first categorized object, wherein each of the categorized objects in the first cluster is also associated with a second embedding; and including the first categorized object in the first cluster based on the second embedding of the first categorized object and the second embeddings of the categorized objects in the first cluster.

Clause 13. The system of clause 12, wherein the NLP model and the second NLP model are the same model.

Clause 14. The system of clause 13, wherein the same NLP model is a pretrained Bidirectional Encoder Representations from Transformers (BERT) model that is fine-tuned to generate embeddings as vectors of tokens from text associated with the categorized objects.

Clause 15. The system of clause 12, 13 or 14, wherein the operations further comprise: for each categorized object of a plurality of categorized objects, generating a second embedding of the categorized object based on a second description associated with the categorized object; and clustering the plurality of categorized objects into a plurality of clusters based on the second embeddings of the plurality of categorized objects, wherein the plurality of clusters includes the first cluster.

Clause 16. The system of any of clauses 11 to 15, wherein the plurality of categorized objects are exclusively associated with a single user.

Clause 17. The system of any of clauses 11 to 16, wherein the plurality of categorized objects are associated with a plurality of users.

Clause 18. The system of clause 17, wherein the operations further comprise, in response to identifying the miscategorization of the first categorized object: identifying a first user-specific cluster of user-specific categorized objects from a plurality of user-specific clusters to include the first categorized object, wherein: each of the user-specific categorized objects in the first user-specific cluster is associated with a second embedding; and identifying the first user-specific cluster is based on the second embedding of the first categorized object and the second embeddings associated with the user-specific categorized objects in the first user-specific cluster; calculating a user-specific distance between the first embedding of the first categorized object and a first user-specific center of the first user-specific cluster, wherein: each of the user-specific categorized objects in the first user-specific cluster is associated with a first embedding; and the first user-specific center is calculated from the first embeddings associated with the user-specific categorized objects in the first user-specific cluster; comparing the user-specific distance with a user-specific threshold; and identifying a final miscategorization of the first categorized object based on the comparison of the user-specific distance and the user-specific threshold, wherein the miscategorization of the first categorized object identified based on the comparison of the distance to the threshold is an initial miscategorization that is identified.

Clause 19. The system of clause 18, wherein the operations further comprise: for each user-specific categorized object of a plurality of user-specific categorized objects, generating the second embedding of the user-specific categorized object based on a second description associated with the user-specific categorized object; and clustering the plurality of user-specific categorized objects into the plurality of user-specific clusters based on the second embeddings of the plurality of user-specific categorized objects.

Clause 20. The system of any of clauses 11 to 19, wherein the operations further comprise: generating an indication of miscategorization of the first categorized object in response to identifying the miscategorization of the first categorized object; and transmitting the indication over a communications network to a user computing device.

Various modifications to the implementations described in this disclosure may be readily apparent to those skilled in the art, and the generic principles defined herein may be applied to other implementations without departing from the spirit or scope of this disclosure. For example, while the figures and description depict an order of operations to be performed in performing aspects of the present disclosure, one or more operations may be performed in any order or concurrently to perform the described aspects of the disclosure. In addition, or to the alternative, a depicted operation may be split into multiple operations, or multiple operations that are depicted may be combined into a single operation. Thus, the claims are not intended to be limited to the implementations shown herein but are to be accorded the widest scope consistent with this disclosure, the principles, and the novel features disclosed herein.

## Claims

1. A computer-implemented method for identifying miscategorizations of objects, the method comprising:
generating, by a natural language processing (NLP) model, a first embedding of a first categorized object included in a first cluster of categorized objects based on a first description associated with the first categorized object, wherein each of the categorized objects in the first cluster is associated with a first embedding;
calculating a distance between the first embedding of the first categorized object and a first center of the first cluster, wherein the first center is calculated from the first embeddings associated with the categorized objects in the first cluster;
comparing the distance to a threshold; and
identifying a miscategorization of the first categorized object based on the comparison.

2. The method of claim 1, further comprising:
generating, by a second NLP model, a second embedding of the first categorized object based on a second description associated with the first categorized object, wherein each of the categorized objects in the first cluster is also associated with a second embedding; and
including the first categorized object in the first cluster based on the second embedding of the first categorized object and the second embeddings of the categorized objects in the first cluster.

3. The method of claim 2, wherein the NLP model and the second NLP model are the same model.

4. The method of claim 3, wherein the same NLP model is a pretrained Bidirectional Encoder Representations from Transformers (BERT) model that is fine-tuned to generate embeddings as vectors of tokens from text associated with the categorized objects.

5. The method of claim 2, 3 or 4, further comprising:
for each categorized object of a plurality of categorized objects, generating a second embedding of the categorized object based on a second description associated with the categorized object; and
clustering the plurality of categorized objects into a plurality of clusters based on the second embeddings of the plurality of categorized objects, wherein the plurality of clusters includes the first cluster.

6. The method of any preceding claim, wherein the plurality of categorized objects are exclusively associated with a single user.

7. The method of any preceding claim, wherein the plurality of categorized objects are associated with a plurality of users.

8. The method of claim 7, further comprising, in response to identifying the miscategorization of the first categorized object:
identifying a first user-specific cluster of user-specific categorized objects from a plurality of user-specific clusters to include the first categorized object, wherein:
each of the user-specific categorized objects in the first user-specific cluster is associated with a second embedding; and
identifying the first user-specific cluster is based on the second embedding of the first categorized object and the second embeddings associated with the user-specific categorized objects in the first user-specific cluster;
calculating a user-specific distance between the first embedding of the first categorized object and a first user-specific center of the first user-specific cluster, wherein:
each of the user-specific categorized objects in the first user-specific cluster is associated with a first embedding; and
the first user-specific center is calculated from the first embeddings associated with the user-specific categorized objects in the first user-specific cluster;
comparing the user-specific distance with a user-specific threshold; and
identifying a final miscategorization of the first categorized object based on the comparison of the user-specific distance and the user-specific threshold, wherein the miscategorization of the first categorized object identified based on the comparison of the distance to the threshold is an initial miscategorization that is identified.

9. The method of claim 8, further comprising:
for each user-specific categorized object of a plurality of user-specific categorized objects, generating the second embedding of the user-specific categorized object based on a second description associated with the user-specific categorized object; and
clustering the plurality of user-specific categorized objects into the plurality of user-specific clusters based on the second embeddings of the plurality of user-specific categorized obj ects.

10. The method of any preceding claim, further comprising:
generating an indication of miscategorization of the first categorized object in response to identifying the miscategorization of the first categorized object; and
transmitting the indication over a communications network to a user computing device.

11. A system for identifying miscategorizations of objects, the system comprising:
one or more processors; and
a memory storing instructions that, when executed by the one or more processors, causes the system to perform operations comprising:
generating, by a natural language processing (NLP) model, a first embedding of a first categorized object included in a first cluster of categorized objects based on a first description associated with the first categorized objects, wherein are of the categorized objects in the first cluster is associated with a first embedding;
calculating a distance between the first embedding of the first categorized object and a first center of the first cluster, wherein the first center is calculated from the first embeddings associated with the categorized objects in the first cluster;
comparing the distance to a threshold; and
identifying a miscategorization of the first categorized object based on the comparison.

12. The system of claim 11, wherein the operations further comprise:
generating, by a second NLP model, a second embedding of the first categorized object based on a second description associated with the first categorized object, wherein each of the categorized objects in the first cluster is also associated with a second embedding; and
including the first categorized object in the first cluster based on the second embedding of the first categorized object and the second embeddings of the categorized objects in the first cluster.

13. The system of claim 11 or 12, further configured to provide functionality corresponding to any of claims 3 to 10.

14. A computer-readable medium comprising instructions that, when executed by one or more programmable processors, cause one or more programmable processors to become configured to perform the method of any of claims 1 to 10.
